# EUROPÄISCHE PATENTSCHRIFT

(11) **EP 4 614 779 B1**
(45) Veröffentlichungstag und Bekanntmachung des Hinweises auf die Patenterteilung: **06.05.2026**
(21) Anmeldenummer: 24161056.7
(22) Anmeldetag: 04.03.2024
(51) Int. Cl.: H02K 7/18, F03D 13/10, H02K 1/14, H02K 15/02

(54) **VERFAHREN ZUR MONTAGE EINES SEGMENTIERTEN GENERATORS EINER WINDENERGIEANLAGE, GENERATORSEGMENT, SEGMENTIERTER GENERATOR UND WINDENERGIEANLAGE**
METHOD FOR ASSEMBLING A SEGMENTED GENERATOR OF A WIND TURBINE, GENERATOR SEGMENT, SEGMENTED GENERATOR AND WIND TURBINE
PROCÉDÉ D'ASSEMBLAGE D'UN GÉNÉRATEUR SEGMENTÉ D'UNE ÉOLIENNE, SEGMENT DE GÉNÉRATEUR, GÉNÉRATEUR SEGMENTÉ ET ÉOLIENNE

(43) Veröffentlichungstag der Anmeldung: 10.09.2025
(73) Patentinhaber: Wobben Properties GmbH, 26607 Aurich (DE)
(72) Erfinder: JÖCKEL, Stephan, Aurich (DE); PHILIPP, Alexander, Aurich (DE); SCHUMANN, Klaas, Aurich (DE)
(74) Vertreter: Eisenführ Speiser

(56) Entgegenhaltungen:
- EP-A1- 4 016 809

## Beschreibung

Die Erfindung betrifft ein Verfahren zur Montage eines segmentierten Generators einer Windenergieanlage. Ferner betrifft die Erfindung ein Generatorsegment für einen segmentierten Generator einer Windenergieanlage, einen segmentierten Generator für eine Windenergieanlage sowie eine Windenergieanlage.

Für die Montage einer Windenergieanlage, insbesondere eines Generators bzw. von Generatorsegmenten eines segmentierten Generators, der Rotorblätter, der Nabe und der Gondel, sind üblicherweise große Lastenkräne erforderlich. Deren Verfügbarkeit ist einerseits beschränkt und andererseits ist der Einsatz solcher Lastenkräne teuer. EP 4016809 A1 offenbart ein Verfahren zur Montage eines Generators einer Windenergieanlage.

Der Erfindung liegt deshalb die Aufgabe zugrunde, ein Verfahren zur Montage eines segmentierten Generators einer Windenergieanlage, ein Generatorsegment, einen segmentierten Generator und eine Windenergieanlage bereitzustellen, welche gegenüber der bekannten Lösung verbessert ist. Insbesondere liegt der Erfindung die Aufgabe zugrunde, ein Verfahren zur Montage eines segmentierten Generators einer Windenergieanlage, ein Generatorsegment, einen segmentierten Generator und eine Windenergieanlage bereitzustellen, welche eine aufwandsärmere Montage des Generatorsegments, des segmentierten Generators und der Windenergieanlage ermöglicht. Insbesondere liegt der Erfindung die Aufgabe zugrunde, ein Verfahren zur Montage eines segmentierten Generators einer Windenergieanlage, ein Generatorsegment, einen segmentierten Generator und eine Windenergieanlage bereitzustellen, welche die erforderliche Montagezeit von Windenergieanlagen mit solchen Lastkränen minimiert.

Gemäß einem ersten Aspekt der Erfindung wird die Aufgabe durch ein Verfahren nach Anspruch 1 gelöst. Dieses Verfahren ist ein Verfahren zur Montage eines segmentierten Generators einer Windenergieanlage.

Ein solch segmentierter Generator wird für den Betrieb der Windenergieanlage aus zwei oder mehreren Generatorsegmenten gebildet, wobei die Generatorsegmente jeweils ein Statorsegment und ein Rotorsegment aufweisen. Hierbei ist vorgesehen, dass das Statorsegment zur Befestigung des Statorsegments an einem Maschinenträgerflansch eines Maschinenträgers einen Statorflansch aufweist. Das Rotorsegment weist zur Befestigung an einem Rotorträger eines Hauptlagers einen Rotorflansch auf.

Es ist in bevorzugter Weise vorgesehen, dass die Rotorsegmente einen segmentierten Rotor des segmentierten Generators bilden können und/oder die Statorsegmente einen segmentierten Stator des segmentierten Generators bilden können. Vorzugsweise sind der segmentierte Rotor und der segmentierte Stator koaxial zur Drehachse des Generators angeordnet. Der segmentierte Rotor kann für den Betrieb hierbei derart am Hauptlager befestigt werden, dass dieser im Betrieb um die Drehachse des segmentierten Generators gegenüber dem feststehenden segmentierten Stator dreht. Hierzu ist zwischen dem Rotor und dem Stator im Betrieb ein entsprechender ringförmiger Luftspalt vorgesehen, der sich in Radialrichtung zwischen dem Rotor und dem Stator erstreckt.

Vorzugsweise ist der segmentierte Rotor in Bezug auf die Drehachse des segmentierten Generators gegenüber dem segmentierten Stator in Radialrichtung außen angeordnet. Alternativ kann es bevorzugt sein, dass der segmentierte Rotor in Bezug auf die Drehachse des segmentierten Generators gegenüber dem segmentierten Stator in Radialrichtung innen angeordnet ist. Insoweit kann der segmentierte Generator als Innenläufer oder als Außenläufer ausgebildet sein.

Es ist vorgesehen, dass sich die zwei oder mehreren Generatorsegmente in Umfangsrichtung jeweils zwischen zwei Verbindungsschnittstellen erstrecken, die zur Verbindung mit Verbindungsschnittstellen von in Umfangsrichtung benachbart angeordneten Generatorsegmenten ausgebildet sind. Vorzugsweise weisen die Verbindungsschnittstellen zumindest abschnittsweise Flansche auf, die zur Verbindung mit benachbart angeordneten Generatorsegmenten ausgebildet sind. Vorzugsweise sind die Verbindungsschnittstellen für eine kraft- und/oder formschlüssige Verbindung benachbart angeordneter Generatorsegmente ausgebildet.

Insbesondere kann es bevorzugt sein, dass die Verbindungsschnittstellen für eine formschlüssige Verbindung benachbart angeordneter Generatorsegmente entsprechende Erhebungen und/oder Ausnehmungen aufweisen, wobei vorzugsweise zu jeder Erhebung eine korrespondierende Ausnehmung ausgebildet wird. Insbesondere weisen die Verbindungsschnittstellen Zentrierbolzen und/oder Zentrierstifte und entsprechende Aufnahmen bzw. Öffnungen für die Zentrierbolzen und/oder Zentrierstifte auf. Dies minimiert in bevorzugter Weise den Aufwand für das Ausrichten eines Luftspaltes des segmentierten Generators. Insbesondere ermöglichen die Zentrierbolzen und/oder Zentrierstifte und die entsprechenden Aufnahmen bzw. Öffnungen für die Zentrierbolzen und/oder Zentrierstifte eine Ausrichtung des Luftspaltes über die Verbindungsschnittstellen. Hierdurch entfällt insbesondere ein aufwändiges Ausrichten des Luftspaltes mit einem Hauptkran. Ein Hauptkran ist hierbei insbesondere ein Kran, welcher dazu ausgebildet ist, die Lasten der Generatorsegmente und/oder der Rotorblätter und/oder des Hauptlagers und/oder der Nabe und/oder des Maschinenträgers zu tragen und zumindest auf Nabenhöhe einer Windenergieanlage zu heben.

Ergänzend oder alternativ kann es bevorzugt sein, dass die Verbindungsschnittstellen für eine kraftschlüssige Verbindung benachbart angeordneter Generatorsegmente jeweils eine Schraubenverbindung aufweisen. Diese Schraubenverbindung kann beispielsweise aus einer Gewindeschraube gebildet werden, welche durch Durchgangslöcher in entsprechenden (abschnittsweisen) Flanschen der Verbindungsschnittstellen hindurchgesteckt und mit einer Schraubenmutter befestigt werden kann. Ferner kann diese Schraubenverbindung beispielsweise aus einer Gewindeschraube gebildet werden, welche durch ein Durchgangsloch eines Flansches eines Generatorsegments hindurchgesteckt und in eine Öffnung mit Innengewinde eines Flansches eines benachbart angeordneten Generatorsegments eingeschraubt wird. Vorzugsweise ist die Schraubenverbindung für ein Vor-Fixieren, insbesondere für eine Minimalverschraubung vorgesehen. Ergänzend oder alternativ ist die Schraubenverbindung für eine Maximalverschraubung vorgesehen. Es kann bevorzugt sein, dass ein Teil der Schraubenverbindungen für die Minimalverschraubung und ein anderer Teil der Schraubenverbindungen für die Maximalverschraubung vorgesehen ist.

Insbesondere sind die Verbindungsschnittstellen in einer solchen Weise ausgebildet, dass kein aufwändiges Ausrichten des Luftspaltes des segmentierten Generators für den Betrieb der Windenergieanlage erforderlich ist. Insbesondere sind die Verbindungsschnittstellen in einer solchen Weise ausgebildet, dass ein Ausrichten des Luftspaltes für den Betrieb der Windenergieanlage über die Verbindungsschnittstellen erfolgt. Hierdurch entfällt insbesondere ein aufwändiges Ausrichten des Luftspaltes mit einem Hauptkran.

Das jeweilige Generatorsegment bzw. das jeweilige Rotorsegment und/oder das jeweilige Statorsegment sind bezogen auf die Drehachse in einer Umfangsrichtung vorzugsweise teilringförmig ausgebildet. Insbesondere weisen das Generatorsegment bzw. das Rotorsegment und/oder das Statorsegment eine teilringförmige Geometrie auf. Ein Generatorsegment bzw. ein Rotorsegment und/oder ein Statorsegment, welches entsprechend teilringförmig ausgebildet ist oder eine teilringförmige Geometrie aufweist, erstreckt sich in der Umfangsrichtung mit einem bestimmten Bogengrad zwischen den beiden Verbindungsschnittstellen.

Vorzugsweise erstrecken sich die zwei oder mehr Generatorsegmente bzw. die zwei oder mehr Rotorsegmente und/oder zwei oder mehr Statorsegmente mit demselben Bogengrad in der Umfangsrichtung. Insbesondere erstrecken sich die Generatorsegmente bzw. die Rotor- und/oder Statorsegmente in Abhängigkeit der Anzahl der jeweiligen Segmente nach folgender Formel: 360°/(Anzahl der Segmente). Hiernach erstrecken sich beispielsweise die Generatorsegmente eines segmentierten Generators, der zwei Generatorsegmente umfasst, in Umfangsrichtung jeweils um 180°, bei drei Generatorsegmenten wären es 120°, bei vier Generatorsegmenten wären es 90° usw. Dies kann entsprechend für die Rotorsegmente und/oder Statorsegmente gelten. Es ist bevorzugt, dass der segmentierte Generator aus zwei Generatorsegmenten gebildet wird. In dieser bevorzugten Ausführungsform, erstrecken sich die beiden Generatorsegmente in Umfangsrichtung vorzugsweise jeweils um 180°.

Es kann auch bevorzugt sein, dass die Generatorsegmente aus denen ein segmentierter Generator zusammengesetzt wird, sich in der Umfangsrichtung mit einem unterschiedlichen Bogengrad erstrecken. Beispielsweise kann ein segmentierter Generator aus drei Generatorsegmenten gebildet sein. Bei einem solchen segmentierten Generator kann sich beispielsweise ein erstes Generatorsegment in der Umfangsrichtung mit 180°, ein zweites Generatorsegment mit 120° und ein drittes Generatorsegment mit 60° erstrecken. Beliebig andere Erstreckungen in der Umfangsrichtung der Generatorsegmente sind denkbar, sofern sie zusammengesetzt in der Umfangsrichtung eine Erstreckung von 360° ergeben. Die Ausführungen zu dem Generatorsegment können entsprechend für ein Rotorsegment eines segmentierten Rotors und/oder ein Statorsegment eines segmentierten Stators gelten.

Die erste und zweite Verbindungsschnittstelle erstrecken sich vorzugsweise im Wesentlichen orthogonal zu der Umfangsrichtung. Insbesondere definieren die erste und zweite Verbindungsschnittstelle eine erste und zweite Verbindungsschnittstellenebene, innerhalb derer sich die Drehachse erstreckt. Insbesondere erstrecken sich die erste und/oder zweite Verbindungsschnittstelle derart, dass die erste und/oder zweite Verbindungsschnittstellenebene sich in Bezug zu der Drehachse in einer Radialrichtung erstrecken. Insbesondere schneiden sich die erste und/oder zweite Verbindungsschnittstellenebene, die sich in Bezug zu der Drehachse in der Radialrichtung erstrecken, in einer Achse, die die Drehachse ist oder definiert. Insbesondere liegt die Drehachse in der ersten und/oder zweiten Verbindungsschnittstellenebene, die sich in Bezug zu der Drehachse in der Radialrichtung erstrecken.

Die erste und/oder zweite Verbindungsschnittstelle eines Generatorsegments weist eine Verbindungsvorrichtung auf. Die Verbindungsvorrichtung an der ersten und/oder zweiten Verbindungsschnittstelle ist dazu ausgebildet, benachbarte Generatorsegmente, die zu einem segmentierten Generator angeordnet sind, miteinander zu verbinden. Die Verbindungsvorrichtung der ersten und/oder zweiten Verbindungsschnittstelle ist insbesondere dazu ausgebildet, benachbarte Generatorsegmente mechanisch zu verbinden. Die mechanische Verbindung kann als kraftschlüssige und/oder stoffschlüssige und/oder formschlüssige Verbindung ausgebildet sein. Bevorzugt weisen die erste und/oder zweite Verbindungsschnittstelle einen Flanschanschluss und/oder eine Schraubverbindung als Verbindungsvorrichtung auf zur Befestigung in der Umfangsrichtung benachbarter Generatorsegmente. Die Ausführungen zu dem Generatorsegment können entsprechend für ein Rotorsegment eines segmentierten Rotors und/oder ein Statorsegment eines segmentierten Stators gelten.

Mit der segmentierten Bauweise des Generators lassen sich transportbedingte Größenbeschränkungen eines Generators überwinden. Insbesondere können segmentierte Generatoren, durch den vereinzelten Transport der Generatorsegmente, auch zu schwierig zugänglichen Aufstellorten von Windenergieanlagen transportiert und auf dem Turm der Windenergieanlagen an der Gondel montiert werden. Insbesondere sind für die Montage eines segmentierten Generators keine großen und teuren Spezialkräne erforderlich. Vielmehr lassen sich die Generatorsegmente einzeln an der Gondel bzw. dem Maschinenträger mit einem kleineren Hauptkran positionieren, der lediglich die Masse eines einzelnen Generatorsegments tragen sowie die Montagehöhe erreichen muss. Hierdurch lassen sich Kosten einsparen, die ansonsten für die wesentlich teureren großen Hauptkräne anfallen. Ferner sind solch große Hauptkräne in der Regel nur beschränkt verfügbar, so dass man durch den segmentierten Generator hinsichtlich der Montagezeit und auch dem Montageort an Flexibilität gewinnt.

Das Verfahren umfasst mehrere Schritte. Dies ist zum einen ein Bereitstellen eines Turms der Windenergieanlage in einem Einbauzustand, und zum anderen ein Bereitstellen des Maschinenträgers. Der Turm weist im Einbauzustand vorzugsweise eine vertikale oder vorzugsweise eine im Wesentlichen vertikale Turmachse auf.

Es folgt ein Anheben und Positionieren des Maschinenträgers an einem oberen Ende des Turms, so dass der Maschinenträger mit dem Turm über ein Turmlager drehbar koppelbar ist, sowie ein Vor-Fixieren des Maschinenträgers an dem Turm für Montagezwecke, so dass der Maschinenträger gegenüber dem Turm mittels des Turmlagers drehbar gelagert ist.

Beim Schritt des Vor-Fixierens des Maschinenträgers an dem Turm für Montagezwecke wird der Maschinenträgers in bevorzugter Weise lediglich für Montagezwecke an dem Turm fixiert. Vorzugsweise ist zu verstehen, dass ein an dem Turm vor-fixierter Maschinenträger lediglich für die bei der Montage einer Windenergieanlage, insbesondere eines segmentierten Generators an dem Turm, auftretenden Lasten ausgelegt ist. Insbesondere erfolgt beim Vor-Fixieren kein Fixieren des Maschinenträgers an dem Turm, welcher einen zuverlässigen Betrieb der Windenergieanlage gewährleistet. Beim Vor-Fixieren des Maschinenträgers an dem Turm trägt die Fixierung vorzugsweise lediglich die bei einer Montage einer Windenergieanlage, insbesondere eines segmentierten Generators, üblicherweise auftretenden Lasten. Es ist insbesondere zu verstehen, dass ein an dem Turm vor-fixierter Maschinenträger nicht für die beim Betrieb der Windenergieanlage üblicherweise auftretenden Lasten ausgelegt ist. Es kann bevorzugt sein, dass der Schritt des Vor-Fixierens des Maschinenträgers an dem Turm für Montagezwecke einem Schritt des Fixierens oder Befestigens des Maschinenträgers an dem Turm für den Betrieb der Windenergieanlage entspricht. Insbesondere kann der Schritt des Vor-Fixierens des Maschinenträgers an dem Turm für Montagezwecke dem Schritt des Befestigens des Maschinenträgers an dem Turm für den Betrieb der Windenergieanlage entsprechen.

Insbesondere umfasst der Schritt des Vor-Fixierens des Maschinenträgers an dem Turm für Montagezwecke das Herstellen einer Minimalverschraubung des Maschinenträgers an dem Turm über das Turmlager. Eine Minimalverschraubung umfasst hierbei vorzugsweise mindestens eine Schraube und bis zu etwa einem Viertel, einem Drittel, einer Hälfte oder drei Viertel der Anzahl der Schrauben, welche für eine Maximalverschraubung vorgesehen sind. Die Maximalverschraubung umfasst die Anzahl der Schrauben, die für die Verbindung des Maschinenträgers an dem Turm für den Betrieb der Windenergieanlage vorgesehen sind.

Das Verfahren umfasst ferner den Schritt des Bereitstellens von zwei oder mehreren Generatorsegmenten in einer Transportposition, wobei das Statorsegment und das Rotorsegment des jeweiligen Generatorsegments miteinander verbunden sind. Insbesondere sind das Statorsegment und das Rotorsegment in solcher Weise miteinander verbunden, dass diese für den Transport und/oder die Montage des Generatorsegments in Bezug auf eine Radialrichtung und/oder eine Axialrichtung und/oder eine Umfangsrichtung miteinander verbunden sind. Insbesondere können für die Verbindung zwischen dem Rotorsegment und dem Statorsegment Flansche und/oder Schraubenverbindungen vorgesehen werden. Vorzugsweise sind das Rotorsegment und das Statorsegment in solcher Weise miteinander verbunden, dass sich zwischen dem Rotorsegment und dem Statorsegment ein ringförmiger Luftspalt einstellt. Vorzugsweise entspricht dieser ringförmige Luftspalt dem für den Betrieb erforderlichen ringförmigen Luftspalt. Es ist vorgesehen, dass die Verbindung zwischen dem Rotorsegment und dem Statorsegment für den Betrieb der Windenergieanlage gelöst wird. Insbesondere wird die Verbindung zwischen dem Statorsegment und dem Rotorsegment des jeweiligen Generatorsegments gelöst, sobald ein Rotorträger eines Hauptlagers mit den Rotorsegmenten der Generatorsegmente verbunden, insbesondere verschraubt ist. Insbesondere wird die Verbindung zwischen dem Statorsegment und dem Rotorsegment des jeweiligen Generatorsegments gelöst, sobald ein Rotorträger eines Hauptlagers mit dem Rotorflansch des Rotorsegments des jeweiligen Generatorsegments verbunden, insbesondere verschraubt ist.

Vorzugsweise befinden sich die Generatorsegmente beispielsweise in einer Transportposition, wenn diese auf einem Tieflader bereitgestellt werden oder auf der Baustelle zwischengelagert werden. In der Transportposition kann die Ausrichtung der Generatorsegmente von der Ausrichtung der Generatorsegmente in der Montageposition abweichen. Insbesondere können die Generatorsegmente in der Transportposition liegend gelagert werden, so dass die Drehachse sich im Wesentlichen vertikal erstreckt oder die Drehachse gegenüber einer vertikalen Ebene lediglich leicht geneigt ist. Es kann allerdings ebenso denkbar sein, die Generatorsegmente in der Transportposition stehend zu lagern, so dass die Drehachse sich im Wesentlichen horizontal erstreckt oder die Drehachse gegenüber einer horizontalen Ebene lediglich leicht geneigt ist.

In weiteren Schritten erfolgt ein Anheben und Positionieren eines der zwei oder mehreren bereitgestellten Generatorsegmente aus der Transportposition in eine Montageposition, in der der Statorflansch an dem Maschinenträgerflansch angeordnet ist, und ein Vor-Fixieren des Generatorsegments für Montagezwecke mittels des Statorflansches an dem Maschinenträgerflansch in der Montageposition. Vorzugsweise wird bei einem segmentierten Generator, der aus zwei Generatorsegmenten gebildet wird, das Generatorsegment in einer 6-Uhr-Position bereitgestellt.

In diesem Schritt ist die Montageposition insbesondere jene Position des Generatorsegments, die ein Fixieren oder Vor-Fixieren des Generatorsegments an dem Maschinenträger ermöglicht. Insbesondere ist die Montageposition die Position, die das Fixieren oder Vor-Fixieren des Generatorsegments mittels des Statorflansches an dem Maschinenträgerflansch des Maschinenträgers ermöglicht.

Vorzugsweise erstreckt sich die Drehachse des zu montierenden Generatorsegments im Wesentlichen horizontal oder ist gegenüber einer horizontalen Ebene lediglich leicht geneigt. Insbesondere ist es bevorzugt, dass die die Drehachse des zu montierenden Generatorsegments in der Montageposition der Ausrichtung und Position der Drehachse im Betriebszustand der Windenergieanlage entspricht oder dass diese sich in Bezug auf die Drehachse im Betriebszustand der Windenergieanlage lediglich parallel versetzt erstreckt.

Beim Schritt des Vor-Fixierens des Generatorsegments für Montagezwecke mittels des Statorflansches an dem Maschinenträgerflansch in der Montageposition wird das Generatorsegment in bevorzugter Weise lediglich für Montagezwecke mittels des Statorflansches an dem Maschinenträgerflansch fixiert. Vorzugsweise ist zu verstehen, dass ein mittels des Statorflansches an dem Maschinenträgerflansch vor-fixiertes Generatorsegment lediglich für die bei der Montage einer Windenergieanlage, insbesondere eines segmentierten Generators an dem Turm, auftretenden Lasten ausgelegt ist. Insbesondere erfolgt beim Vor-Fixieren kein Fixieren des Generatorsegments mittels des Statorflansches an dem Maschinenträgerflansch, welches einen zuverlässigen Betrieb der Windenergieanlage gewährleistet. Beim Vor-Fixieren des Generatorsegments mittels des Statorflansches an dem Maschinenträgerflansch trägt die Fixierung lediglich die bei einer Montage einer Windenergieanlage, insbesondere eines segmentierten Generators, üblicherweise auftretenden Lasten. Es ist insbesondere zu verstehen, dass ein an dem Turm vor-fixiertes Generatorsegment nicht für die beim Betrieb der Windenergieanlage üblicherweise auftretenden Lasten ausgelegt ist.

Insbesondere umfasst der Schritt des Vor-Fixierens das Herstellen einer Minimalverschraubung des Statorflansches an dem Maschinenträgerflansch. Eine Minimalverschraubung umfasst hierbei vorzugsweise mindestens eine Schraube und bis zu etwa einem Viertel, einem Drittel, einer Hälfte oder drei Viertel der Anzahl der Schrauben, welche für eine Maximalverschraubung vorgesehen sind, wobei bei der Maximalverschraubung die Anzahl der Schrauben umfasst, die für die Verbindung des Statorflansches an dem Maschinenträgerflansch für den Betrieb der Windenergieanlage vorgesehen sind.

Insbesondere ist es bevorzugt, dass für das Vor-Fixieren von Generatorsegmenten Befestigungsanschlüsse vorgesehen sind und/oder verwendet werden, die von Befestigungsanschlüssen, die für das Befestigen der Generatorsegmente für den Betrieb der Windenergieanlage vorgesehen sind und/oder verwendet werden, verschieden sind.

Insbesondere ist es bevorzugt, dass an dem Statorflansch die Befestigungsanschlüsse für das Vor-Fixieren als Öffnungen mit Innengewinde ausgebildet sind. Diese Öffnungen können als Durchgangsöffnungen mit Innengewinde oder als Sacklochbohrung mit Innengewinde ausgebildet sein. Vorzugsweise sind die Öffnungen für das Vor-Fixieren am Statorflansch in Umfangsrichtung äquidistant zueinander angeordnet. Für das Vor-Fixieren ist es ferner in bevorzugter Weise vorgesehen, dass der Maschinenträgerflansch eine Durchgangsöffnung aufweist, durch welche für das Vor-Fixieren der Generatorsegmente eine Schraube hindurchgeführt werden kann und in die Öffnung mit dem Innengewinde am Statorflansch eingeschraubt werden kann. Die Schrauben für das Vor-Fixieren können gelöst werden, sobald die Generatorsegmente für den Betrieb der Windenergieanlage befestigt worden sind.

Insbesondere ist es bevorzugt, dass an dem Statorflansch die Befestigungsanschlüsse für das Befestigen der Generatorsegmente für den Betrieb der Windenergieanlage als Durchgangsöffnungen ausgebildet sind. Diese Durchgangsöffnungen weisen vorzugsweise kein Innengewinde auf. Für das Befestigen der Generatorsegmente für den Betrieb der Windenergieanlage ist es in bevorzugter Weise vorgesehen, dass der Statorflansch zwischen Achszapfen und Motorträgerflansch verspannt wird. Entsprechend können der Achszapfen des Hauptlagers und/oder der Maschinenträgerflansch als Befestigungsanschlüsse Durchgangsöffnungen aufweisen. Für das Befestigen der Generatorsegmente für den Betrieb der Windenergieanlage kann dann beispielsweise eine Gewindestange durch die Durchgangsöffnungen des Achszapfens, des zwischen Achszapfen und Maschinenträgerflansch angeordneten Statorflansches, und des Maschinenträgerflansches hindurchgeschoben werden. Durch beidseitiges Aufschrauben von Gewindemuttern auf die Gewindestange kann dann das Generatorsegment befestigt werden, indem der Statorflansch zwischen dem Maschinenträgerflansch und dem Achszapfen des Hauptlagers verspannt wird. Alternativ kann in bevorzugter Weise eine Spannschraube vorgesehen werden, welche durch die Durchgangsöffnung des Achszapfens und des Statorflansches hindurchgeführt wird und in eine Öffnung mit Innengewinde des Maschinenträgerflansches eingeschraubt wird.

Das Verfahren umfasst weiterhin die Schritte des Anhebens und Positionierens mindestens eines weiteren der zwei oder mehreren Generatorsegmente aus der Transportposition in eine weitere Montageposition an den Maschinenträgerflansch des Maschinenträgers, so dass das bereits vor-fixierte Generatorsegment mit dem in der weiteren Montageposition positionierten Generatorsegment über die Verbindungsschnittstellen der jeweiligen Generatorsegmente verbunden werden kann. Vorzugsweise wird bei einem segmentierten Generator, der aus zwei Generatorsegmenten gebildet wird, das Generatorsegment in einer 12-Uhr-Position bereitgestellt.

Auch bei diesen Schritten erstreckt sich die Drehachse des zu montierenden weiteren Generatorsegments vorzugsweise im Wesentlichen horizontal oder ist gegenüber einer horizontalen Ebene lediglich leicht geneigt. Insbesondere ist es bevorzugt, dass die Drehachse des zu montierenden Generatorsegments in der Montageposition der Ausrichtung und Position der Drehachse im Betriebszustand der Windenergieanlage entspricht oder diese sich in Bezug auf die Drehachse im Betriebszustand der Windenergieanlage lediglich parallel versetzt erstreckt.

Es folgt ein Vor-Fixieren des weiteren Generatorsegments für Montagezwecke in der weiteren Montageposition mittels des Statorflansches an dem Maschinenträgerflansch und/oder an dem bereits vor-fixierten Generatorsegment über die Verbindungsschnittstellen der jeweiligen Generatorsegmente, wobei die Schritte Anheben, Positionieren und Vor-Fixieren mit weiteren der zwei oder mehreren Generatorsegmente wiederholt werden bis die angehobenen, positionierten und fixierten Generatorsegmente den segmentierten Generator bilden können.

Auch beim Schritt des Vor-Fixierens des weiteren Generatorsegments für Montagezwecke mittels des Statorflansches an dem Maschinenträgerflansch in der Montageposition wird das Generatorsegment in bevorzugter Weise lediglich für Montagezwecke mittels des Statorflansches an dem Maschinenträgerflansch fixiert. Vorzugsweise ist zu verstehen, dass ein mittels des Statorflansches an dem Maschinenträgerflansch vor-fixiertes weiteres Generatorsegment lediglich für die bei der Montage einer Windenergieanlage, insbesondere eines segmentierten Generators an dem Turm, auftretenden Lasten ausgelegt ist. Insbesondere erfolgt beim Vor-Fixieren kein Fixieren des weiteren Generatorsegments mittels des Statorflansches an dem Maschinenträgerflansch, welches einen zuverlässigen Betrieb der Windenergieanlage gewährleistet. Beim Vor-Fixieren des weiteren Generatorsegments mittels des Statorflansches an dem Maschinenträgerflansch trägt die Fixierung lediglich die bei einer Montage einer Windenergieanlage, insbesondere eines segmentierten Generators, üblicherweise auftretenden Lasten. Es ist insbesondere zu verstehen, dass ein an dem Turm vor-fixiertes weiteres Generatorsegment nicht für die beim Betrieb der Windenergieanlage üblicherweise auftretenden Lasten ausgelegt ist.

Insbesondere umfasst der Schritt des Vor-Fixierens das Herstellen einer Minimalverschraubung des Statorflansches an dem Maschinenträgerflansch. Eine Minimalverschraubung umfasst hierbei vorzugsweise mindestens eine Schraube und bis zu etwa einem Viertel, einem Drittel, einer Hälfte oder drei Viertel der Anzahl der Schrauben, welche für eine Maximalverschraubung vorgesehen sind, wobei die Maximalverschraubung die Anzahl der Schrauben umfasst, die für die Verbindung des Statorflansches an dem Maschinenträgerflansch für den Betrieb der Windenergieanlage vorgesehen sind.

In der 12-Uhr-Position wirkt auf den segmentierten Generator ein höheres Kippmoment als in der 6-Uhr-Position. Daher ist es bei einem segmentierten Generator, der aus zwei Generatorsegmenten gebildet wird, bevorzugt, dass die erforderliche Anzahl der Schrauben bei einer Maximalverschraubung des in der 6-Uhr-Position positionierten und vor-fixierten Generatorsegments kleiner ist als die erforderliche Anzahl der Schrauben bei einer Maximalverschraubung des in der 12-Uhr-Position positionierten und vor-fixierten Generatorsegments. Vorzugsweise entspricht die Anzahl der erforderlichen Schrauben bei der Maximalverschraubung des in der 6-Uhr-Position positionierten und vor-fixierten Generatorsegments einem Viertel bis drei Viertel der erforderlichen Anzahl der Schrauben bei einer Maximalverschraubung des in der 12-Uhr-Position positionierten und vor-fixierten Generatorsegments. Insbesondere entspricht die Anzahl der erforderlichen Schrauben bei der Maximalverschraubung des in der 6-Uhr-Position positionierten und vor-fixierten Generatorsegments einer Hälfte bis drei Viertel der erforderlichen Anzahl der Schrauben bei einer Maximalverschraubung des in der 12-Uhr-Position positionierten und vor-fixierten Generatorsegments.

Darüber hinaus umfasst das Verfahren den Schritt des Bereitstellens des Hauptlagers und einer an dem Hauptlager befestigten Nabe in der Transportposition, wobei an der Nabe vorzugsweise drei Rotorblattlager vorgesehen sind, wobei das Hauptlager den Rotorträger und einen Achszapfen umfasst, wobei der Rotorträger für den Betrieb des segmentierten Generators gegenüber dem Achszapfen drehbar gelagert ist. Es kann bevorzugt sein, dass die Rotorblattlager jeweils an den Rotorblättern vorgesehen werden.

Vorzugsweise befindet sich das Hauptlager mit der daran befestigten Nabe beispielsweise in einer Transportposition, wenn diese auf einem Tieflader bereitgestellt wird oder auf der Baustelle zwischengelagert wird. In der Transportposition kann die Ausrichtung des Hauptlagers mit der daran befestigten Nabe von der Ausrichtung des Hauptlagers mit der daran befestigten Nabe in der Montageposition abweichen. Insbesondere kann das Hauptlager mit der daran befestigten Nabe in der Transportposition liegend gelagert werden so dass die Drehachse des Hauptlagers sich im Wesentlichen vertikal erstreckt oder die Drehachse des Hauptlagers gegenüber einer vertikalen Ebene lediglich leicht geneigt ist. Es kann allerdings ebenso denkbar sein, das Hauptlager mit der daran befestigten Nabe in solcher Weise zu lagern, dass die Drehachse des Hauptlagers sich im Wesentlichen horizontal erstreckt oder die Drehachse des Hauptlagers gegenüber einer horizontalen Ebene lediglich leicht geneigt ist.

Es folgt ein Anheben und Positionieren des Hauptlagers, so dass der Statorflansch des Statorsegments zwischen dem Maschinenträgerflansch und dem Achszapfen angeordnet ist. Vorzugsweise nimmt das Hauptlager in diesem Schritt eine Position ein, welche im Wesentlichen der Betriebsposition des Hauptlagers für den Betrieb der Windenergieanlage entspricht.

Darüber hinaus umfasst das Verfahren gemäß dem ersten Aspekt ein Befestigen des Achsflansches an dem Maschinenträgerflansch für den Betrieb der Windenergieanlage, wobei der Statorflansch des Statorsegments zwischen dem Maschinenträgerflansch und dem Achszapfen angeordnet ist, wobei der Rotorträger für die Montage von Rotorblättern an der Nabe noch nicht mit den jeweiligen Rotorsegmenten der Generatorsegmente verbunden ist oder wird. Dies hat den Vorteil, dass für die Montage der Rotorblätter eine Relativbewegung zwischen Rotorsegmenten bzw. dem Rotor und dem Rotorträger möglich ist. Dies ermöglicht, dass ein teurer Hauptkran lediglich für die Vormontage der Windenergieanlage und für den Abschluss der Montage, zum Beispiel das Befestigen der Generatorsegmente mit einer Maximalverschraubung oder das Verbinden des Rotorträgers mit den Rotorsegmenten, erforderlich ist. Die Befestigung von Generatorsegmenten, Hauptlager, Nabe, etc., welche sonst üblicherweise den Einsatz eines Krans erfordern, ist ohne die Hilfe eines Krans, insbesondere ohne die Hilfe eines Hauptkrans, möglich. Insbesondere kann der Abbau oder die Verlagerung des Krans, insbesondere des Hauptkrans, an einen anderen Standort, nach Abschluss der Vormontage, d. h. dem Vor-Fixieren der Generatorsegmente und/oder des Maschinenträgers sowie des Hauptlagers und der Nabe, und vor Abschluss der Montage erfolgen.

Vorzugsweise umfassen die Schritte des Befestigens des Achsflansches an dem Maschinenträgerflansch für den Betrieb der Windenergieanlage sowie des Befestigens des Maschinenträgers an dem Turm für den Betrieb der Windenergieanlage jeweils das Herstellen einer Maximalverschraubung.

Bei der Maximalverschraubung wird die Anzahl der Schrauben vorgesehen, die für die Verbindung des Statorflansches an dem Maschinenträgerflansch für den Betrieb der Windenergieanlage bzw. die für die Verbindung des Maschinenträgers an dem Turm für den Betrieb der Windenergieanlage erforderlich sind.

Diese Erfindung beruht auf der Erkenntnis, dass Montagezeit eingespart wird, während ein teurer und lediglich eingeschränkt verfügbarer Hauptkran auf der Baustelle eingeplant und bereitgestellt wird. Indem die Generatorsegmente des segmentierten Generators einerseits und die der Maschinenträger andererseits zunächst nur vor-fixiert werden, vorzugsweise also lediglich eine Minimalverschraubung hergestellt wird, kann der Hauptkran frühzeitig abgebaut und zu seinem nächsten Einsatzort verlegt werden. Das Verfahren gemäß dem ersten Aspekt ermöglicht somit, dass der teure und häufig nur eingeschränkt verfügbare Hauptkran lediglich für die Dauer des Vor-Fixierens bereitgestellt werden muss, nicht aber für die Dauer des Befestigens, wie dies für den Betrieb der Windenergieanlage erforderlich ist. Die Schritte des Befestigens, d. h. vorzugsweise das Herstellen der Maximalverschraubungen, kann also erfolgen, nachdem der Hauptkran bereits an den nächsten Einsatzort verlegt worden ist.

Gemäß einer bevorzugten Ausführungsform umfasst das Verfahren die folgenden Schritte: Bereitstellen eines ersten Rotorblattes, Anheben und Positionieren des ersten Rotorblattes an einem ersten Rotorblattlager der drei Rotorblattlager, und Befestigen des ersten Rotorblattes an dem ersten Rotorblattlager. Vorzugsweise wird hierbei das erste Rotorblattlager in einer 4-Uhr-Position oder in einer 8-Uhr-Position bereitgestellt, so dass eine Befestigung des ersten Rotorblattes an dem ersten Rotorblattlager in der 4-Uhr-Position oder in der 8-Uhr-Position erfolgt.

Eine 4-Uhr-Position entspricht insbesondere einer 120°-Position des Rotorblattes, bei der das Rotorblatt in Bezug auf eine 12-Uhr-Stellung des Rotorblattes im Uhrzeigersinn um 120° gedreht ausgerichtet ist. Vorzugsweise entspricht eine 8-Uhr-Position des Rotorblattes einer Stellung, bei der das Rotorblatt in Bezug auf eine 12-Uhr-Stellung des Rotorblattes im Uhrzeigersinn um 240° gedreht ausgerichtet ist. In dieser Position ist eine Montage des Rotorblattes an der Nabe in besonders einfacher Weise möglich. Ferner wirkt in dieser Stellung ein vergleichsweise geringes Drehmoment auf die Nabe, während das Rotorblatt an der Nabe montiert wird.

Vorzugsweise wird die Nabe mit Hilfe eines Hauptkrans gedreht, so dass das Rotorblattlager in der gewünschten Position, beispielsweise in der 4-Uhr-Position oder in der 8-Uhr-Position bereitgestellt wird. Das Drehen der Nabe ist in besonders vorteilhafter Weise möglich, da zu diesem Zeitpunkt der Montage, der Rotorträger des Hauptlagers noch nicht an dem Rotorsegment befestigt ist, der Achszapfen des Hauptlagers jedoch an dem Maschinenträger befestigt ist. Für die Einzelblattmontage können also Nabe und Rotorträger gedreht werden, ohne das Rotorsegment selbst zu drehen. Dies hat den Effekt, dass zunächst alle Montagearbeiten, für die der Hauptkran zwingend erforderlich ist, durchgeführt werden, bevor Montagearbeiten durchgeführt werden, für die der Hauptkran nicht zwingend erforderlich ist. Dies hat zur Folge, dass der Hauptkran schneller an einen anderen Einsatzort verlagert werden kann und somit Kosten für die Bereitstellung und Nutzung des Hauptkrans abnehmen.

Nach einer bevorzugten Fortbildung umfasst das Verfahren die folgenden Schritte: Bereitstellen eines zweiten Rotorblattes, Anheben und Positionieren des zweiten Rotorblattes an einem zweiten Rotorblattlager der drei Rotorblattlager, und Befestigen des zweiten Rotorblattes an dem zweiten Rotorblattlager, wobei vorzugsweise das zweite Rotorblattlager in einer 4-Uhr-Position oder in einer 8-Uhr-Position bereitgestellt wird, so dass eine Befestigung des zweiten Rotorblattes an dem zweiten Rotorblattlager in der 4-Uhr-Position oder in der 8-Uhr-Position erfolgt.

Dies hat den Vorteil, dass beim Befestigen des zweiten Rotorblattes kein Drehmoment auf die Nabe wirkt, da sich die jeweils durch die beiden Rotorblätter induzierten Drehmomente aufheben.

Weiterhin umfasst das Verfahren nach einer bevorzugten Fortbildung die folgenden Schritte: Bereitstellen eines dritten Rotorblattes, vorzugsweise Drehen der Nabe mit den beiden befestigten Rotorblättern, so dass eines der beiden Rotorblätter in einer 10-Uhr-Position ausgerichtet ist und das andere der beiden Rotorblätter in einer 6-Uhr-Position ausgerichtet ist, Anheben und Positionieren des dritten Rotorblattes an einem dritten Rotorblattlager der drei Rotorblattlager, und Befestigen des dritten Rotorblattes an dem dritten Rotorblattlager, wobei vorzugsweise das dritte Rotorblattlager in einer 2-Uhr-Position oder in einer 10-Uhr-Position bereitgestellt wird, so dass eine Befestigung des dritten Rotorblattes an dem dritten Rotorblattlager in der 2-Uhr-Position oder in der 10-Uhr-Position erfolgt.

Gemäß einer bevorzugten Ausführungsform des Verfahrens ist vorgesehen, dass das Statorsegment zumindest eines Generatorsegments, vorzugsweise im Bereich des Statorflansches, eine Arretiervorrichtung aufweist und der Rotorträger des Hauptlagers eine Arretieraufnahme aufweist, in welche die Arretiervorrichtung eingreifen kann, um eine Drehbewegung des Rotorträgers und somit der Nabe gegenüber dem Statorsegment bzw. dem Maschinenträger während der Montage eines der Rotorblätter in einer Montageposition zu verhindern, und freigeben kann, um eine Drehbewegung des Rotorträgers und somit der Nabe gegenüber dem Statorsegment bzw. dem Maschinenträger in eine gewünschte Montageposition für die Montage eines der Rotorblätter zu ermöglichen.

Dies hat den Vorteil, dass unmittelbar nach der Montage der Generatorsegmente sowie der Montage des mit der Nabe vormontierten Hauptlagers mit der Einzelblattmontage fortgefahren werden kann. Denn die Einheit aus Nabe und Rotorträger ist bereits jetzt durch einen Kran zwischen verschiedenen (Montage-)positionen drehbar und in verschiedenen (Montage-)positionen arretierbar. Dies wird in besonders vorteilhafter Anordnung der Arretieraufnahmen am Rotorträger des Hauptlagers und der dadurch noch möglichen Relativbewegung von Rotorträger und Nabe, wegen des noch offenen Flansches, erreicht. Dies spart in besonders vorteilhafter Weise wertvolle Montagezeit während der teure Hauptkran auf der Baustelle ist, und ermöglicht, dass die Generatorsegmente des segmentierten Generators ohne einen teuren Hauptkran befestigt werden können, insbesondere mit einer Maximalverschraubung befestigt werden können. Der teure Hauptkran kann somit bereits abgebaut werden und die Befestigung der Generatorsegmente kann ohne den teuren Hauptkran erfolgen.

In dieser Ausführungsform umfasst das Verfahren die folgenden Schritte: Arretieren des Rotorträgers des Hauptlagers an dem Statorsegment und/oder dem Maschinenträger vor der Montage des ersten Rotorblattes an der Nabe, und Lösen der Arretierung nach der Montage der ersten beiden Rotorblätter an der Nabe, und Drehen der Nabe mit den beiden montierten Rotorblättern vor der Montage des dritten Rotorblattes, so dass eines der beiden bereits montierten Rotorblätter in einer 6-Uhr-Position ausgerichtet ist und das andere der beiden Rotorblätter in einer 10-Uhr-Position oder in einer 2-Uhr-Position ausgerichtet ist, Arretieren des Rotorträgers des Hauptlagers an dem Statorsegment und/oder dem Maschinenträger vor der Montage des dritten Rotorblattes an der Nabe, und Montage des dritten Rotorblattes an die Nabe. Vorzugsweise erfolgt ein Lösen der Arretierung nach der Montage des dritten Rotorblattes an der Nabe.

Es ist bevorzugt, dass eine Arretierung mit der Arretierungsvorrichtung erfolgt, wenn eine gewünschte Montageposition bereitgestellt wird. Arretiert die Arretierungsvorrichtung, verhindert dies eine Drehbewegung des Rotorträgers bzw. eine Drehbewegung der mit dem Rotorträger verbundenen Nabe gegenüber dem Maschinenträger.

Weiterhin ist gemäß einer bevorzugten Fortbildung des Verfahrens vorgesehen, dass die Arretiervorrichtung mindestens einen verschiebbaren Arretierbolzen aufweist und die Arretieraufnahme an dem Rotorträger mindestens eine dem Arretierbolzen entsprechende Bolzenaufnahmeöffnung ausbildet, wobei der Schritt des Arretierens ein Verschieben des mindestens einen Arretierbolzens in die entsprechende Bolzenaufnahmeöffnung hinein umfasst und/oder der Schritt des Freigebens ein Verschieben des mindestens einen Arretierbolzens aus der entsprechenden Bolzenaufnahmeöffnung heraus umfasst.

In bevorzugter Weise ist vorgesehen, dass für die Montage eines Rotorblattes in der Montageposition der Arretierbolzen in die Arretieraufnahme eingeschoben ist. Um etwa ein weiteres Rotorblatt zu montieren, wird die Arretiervorrichtung freigegeben, d. h. der Arretierbolzen wird aus der Arretieraufnahme herausgeschoben, so dass die Nabe in die Montageposition für das nächste Rotorblatt gedreht werden kann, in welcher der Arretierbolzen dann wieder in die Arretieraufnahme hinein verschoben wird, um ein Verdrehen der Nabe während der Montage des weiteren Rotorblattes zu verhindern.

Gemäß einer weiteren bevorzugten Fortbildung umfasst das Verfahren die Schritte des Verbindens des Rotorträgers mit den jeweiligen Rotorsegmenten der Generatorsegmente sowie des anschließenden Lösens des Statorsegments von dem Rotorsegment, so dass der Rotor gegenüber dem Stator drehbar ist. In diesem Verfahrensschritt ist beispielsweise vorgesehen, Flansche und/oder Schraubenverbindungen, welche das Rotorsegment und das Statorsegment eines Generatorsegments miteinander verbinden, zu lösen. Vorzugsweise erfolgt dieser Schritt nach der Befestigung der drei Rotorblätter. Insbesondere kann dieser Verfahrensschritt ohne die Verwendung eines Hauptlastkrans durchgeführt werden. Dies hat den Vorteil, dass die Einsatzzeit für den Hauptlastkran und somit die Montagekosten reduziert werden.

Weiterhin ist gemäß einer bevorzugten Fortbildung des Verfahrens vorgesehen, dass sich die Generatorsegmente in Umfangsrichtung jeweils zwischen zwei Verbindungsschnittstellen erstrecken, umfassend die Schritte: Vorbereiten der Verbindungsschnittstellen der Generatorsegmente für die Befestigung benachbart angeordneter Generatorsegmente, und Befestigen von den Verbindungsschnittstellen der benachbart angeordneten Generatorsegmente. Mittels der Verbindungsschnittstellen lassen sich in Umfangsrichtung benachbart angeordnete Generatorsegmente in bevorzugter Weise miteinander verbinden.

Nach einer ferner bevorzugten Ausführungsform des Verfahrens umfasst dieses die folgenden Schritte: Befestigen der vor-fixierten Generatorsegmente für den Betrieb der Windenergieanlage, insbesondere nach der Montage der Rotorblätter und/oder ohne Zuhilfenahme eines Krans, insbesondere ohne Zuhilfenahme eines Hauptlastkrans, und/oder Befestigen des vor-fixierten Maschinenträgers an dem Turm für den Betrieb der Windenergieanlage, insbesondere nach der Montage der Rotorblätter und/oder ohne Zuhilfenahme eines Krans, insbesondere ohne Zuhilfenahme eines Hauptlastkrans. Besonders bevorzugt erfolgt das Befestigen der vor-fixierten Generatorsegmente und/oder des Maschinenträgers ohne Zuhilfenahme eines Hauptkrans.

Ferner umfasst das Verfahren gemäß einer bevorzugten Ausführungsform den Schritt: Befestigen des Rotorträgers an den Rotorsegmenten der Generatorsegmente nachdem die Rotorblätter an der Nabe befestigt worden sind, insbesondere ohne Zuhilfenahme eines Krans. Besonders bevorzugt erfolgt das Befestigen des Rotorträgers an den Rotorsegmenten der Generatorsegmente ohne Zuhilfenahme eines Hauptkrans. Vorzugsweise erfolgt dieser Schritt nach der Befestigung der drei Rotorblätter.

Die eingangs genannte Aufgabe wird gemäß einem zweiten Aspekt durch ein Generatorsegment nach Anspruch 11 gelöst. Dieses Generatorsegment ist ein Generatorsegment für einen segmentierten Generator einer Windenergieanlage.

Das Generatorsegment weist ein Statorsegment und ein Rotorsegment auf. Hierbei ist vorgesehen, dass das Statorsegment zur Befestigung des Statorsegments an einem Maschinenträgerflansch eines Maschinenträgers einen Statorflansch aufweist. Das Rotorsegment weist zur Befestigung an einem Rotorträger eines Hauptlagers einen Rotorflansch auf. Das Generatorsegment erstreckt sich in Umfangsrichtung zwischen zwei Verbindungsschnittstellen, die zur Verbindung mit Verbindungsschnittstellen von in Umfangsrichtung benachbart angeordneten Generatorsegmenten ausgebildet sind.

Das Statorsegment kann mit dem Rotorsegment über eine Arretiervorrichtung zu Montagezwecken gekoppelt sein, wobei die Arretiervorrichtung im Bereich des Rotorflansches und des Statorflansches vorgesehen ist, so dass das Rotorsegment und das Statorsegment im Bereich des Rotorflansches und des Statorflansches mindestens eine als Bolzenaufnahmeöffnung ausgebildete Arretieraufnahme aufweist, durch welche jeweils ein Arretierbolzen zur Arretierung des Rotorträgers an dem Statorsegment aus einer Freigabestellung eingeschoben sein kann, so dass die Arretiervorrichtung eine Arretierstellung einnimmt, wobei der Arretierbolzen für den Betrieb des segmentierten Generators aus der Arretieraufnahme entfernbar ist, so dass die Arretiervorrichtung eine Freigabestellung einnimmt.

Entsprechend ist vorzugsweise in einer Arretierstellung der Arretiervorrichtung der Arretierbolzen zu Montagezwecken in die Arretieraufnahme eingeschoben. In der Arretierstellung ist insoweit eine Relativverschiebung zwischen dem Statorsegment und dem Rotorträger unterbunden. Insbesondere ist in der Arretierstellung eine relative Drehbewegung des Rotorträgers gegenüber dem Statorsegment unterbunden. Ergänzend oder alternativ ist in bevorzugter Weise vorgesehen, dass in der Arretierstellung eine relative translatorische Bewegung des Rotorträgers gegenüber dem Statorsegment unterbunden ist. In einer von der Arretierstellung verschiedenen Freigabestellung der Arretiervorrichtung ist der Arretierbolzen entsprechend nicht in die Arretieraufnahme eingeschoben. In der Freigabestellung der Arretiervorrichtung ist eine Relativbewegung zwischen dem Rotorträger gegenüber dem Statorsegment freigegeben bzw. möglich. Insbesondere ist in der Freigabestellung der Arretiervorrichtung eine relative Drehbewegung des Rotorträgers gegenüber dem Statorsegment freigegeben und/oder eine relative translatorische Bewegung des Rotorträgers gegenüber dem Statorsegment freigegeben.

Ergänzend oder alternativ ist vorgesehen, dass Statorflansch Befestigungsanschlüsse für ein Vor-Fixieren des Generatorsegments am Maschinenträgerflansch für Montagezwecke aufweist und Befestigungsanschlüsse für ein Befestigen des Generatorsegments am Maschinenträgerflansch für den Betrieb der Windenergieanlage aufweist. Insbesondere ist es bevorzugt, dass die für das Vor-Fixieren von Generatorsegmenten vorgesehenen und/oder verwendeten Befestigungsanschlüsse, von den Befestigungsanschlüssen, die für das Befestigen der Generatorsegmente für den Betrieb der Windenergieanlage vorgesehen sind und/oder verwendet werden, verschieden sind.

Insbesondere ist es bevorzugt, dass an dem Statorflansch die Befestigungsanschlüsse für das Vor-Fixieren als Öffnungen mit Innengewinde ausgebildet sind. Diese Öffnungen können als Durchgangsöffnungen mit Innengewinde oder als Sacklochbohrung mit Innengewinde ausgebildet sein. Vorzugsweise sind die Öffnungen für das Vor-Fixieren am Statorflansch in Umfangsrichtung äquidistant zueinander angeordnet. Für das Vor-Fixieren ist es ferner in bevorzugter Weise vorgesehen, dass der Maschinenträgerflansch eine Durchgangsöffnung aufweist, durch welche für das Vor-Fixieren der Generatorsegmente eine Schraube hindurchgeführt werden kann und in die Öffnung mit dem Innengewinde am Statorflansch eingeschraubt werden kann. Die Schrauben für das Vor-Fixieren können gelöst werden, sobald die Generatorsegmente für den Betrieb der Windenergieanlage befestigt worden sind.

Insbesondere ist es bevorzugt, dass an dem Statorflansch die Befestigungsanschlüsse für das Befestigen der Generatorsegmente für den Betrieb der Windenergieanlage als Durchgangsöffnungen ausgebildet sind. Diese Durchgangsöffnungen weisen vorzugsweise kein Innengewinde auf. Für das Befestigen der Generatorsegmente für den Betrieb der Windenergieanlage ist es in bevorzugter Weise vorgesehen, dass der Statorflansch zwischen Achszapfen und Motorträgerflansch verspannt wird. Entsprechend können der Achszapfen des Hauptlagers und/oder der Maschinenträgerflansch als Befestigungsanschlüsse Durchgangsöffnungen aufweisen. Für das Befestigen der Generatorsegmente für den Betrieb der Windenergieanlage kann dann beispielsweise eine Gewindestange durch die Durchgangsöffnungen des Achszapfens, des zwischen Achszapfen und Maschinenträgerflansch angeordneten Statorflansches, und des Maschinenträgerflansches hindurchgeschoben werden. Durch beidseitiges Aufschrauben von Gewindemuttern auf die Gewindestange, kann dann das Generatorsegment befestigt werden, indem der Statorflansch zwischen dem Maschinenträgerflansch und dem Achszapfen des Hauptlagers verspannt wird. Alternativ kann in bevorzugter Weise eine Spannschraube vorgesehen werden, welche durch die Durchgangsöffnung des Achszapfens und des Statorflansches hindurchgeführt wird und in eine Öffnung mit Innengewinde des Maschinenträgerflansches eingeschraubt wird.

Die eingangs genannte Aufgabe wird gemäß einem dritten Aspekt durch einen segmentierten Generator nach Anspruch 12 gelöst. Dieser segmentierte Generator ist ein segmentierter Generator für eine Windenergieanlage, aufweisend zwei oder mehrere Generatorsegmente. Diese Generatorsegmente können, wie diese zuvor gemäß dem zweiten Aspekt beschrieben worden sind, ausgebildet sein.

Die eingangs genannte Aufgabe wird gemäß einem vierten Aspekt durch eine Windenergieanlage nach Anspruch 13 gelöst. Diese Windenergieanlage weist ein Generatorsegment auf, wie diese zuvor gemäß dem zweiten Aspekt beschrieben worden ist, und/oder weist einen segmentierten Generator auf, wie dieser zuvor gemäß dem dritten Aspekt beschrieben worden ist.

Zu den Vorteilen, Ausführungsvarianten und Ausführungsdetails dieser weiteren Aspekte der Erfindung und ihrer Fortbildungen wird auch auf die vorangegangene Beschreibung zu den entsprechenden Merkmalen des Verfahrens zur Montage eines segmentierten Generators einer Windenergieanlage bzw. der jeweiligen anderen Aspekte verwiesen.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1:: eine schematische dreidimensionale Ansicht einer beispielhaften Ausführungsform einer Windenergieanlage;
- Fig. 2:: eine schematische dreidimensionale Ansicht einer beispielhaften Ausführungsform eines segmentierten Generators;
- Fig. 3:: eine schematische dreidimensionale Ansicht einer beispielhaften Ausführungsform eines Generatorsegments des in Figur 2 gezeigten segmentierten Generators;
- Fig. 4:: eine schematische Detailansicht des in Figur 2 gezeigten segmentierten Generators;
- Fig. 5:: eine schematische Schnittansicht des in den Figuren 2-4 beispielhaft dargestellten segmentierten Generators im montierten Zustand;
- Fig. 6a-d:: einen schematischen Ablauf der Montage einer Windenergieanlage mit den Generatorsegmenten des in den Figuren 2-4 gezeigten segmentierten Generators;
- Fig. 7:: eine schematische Schnittansicht einer zu montierenden Windenergieanlage in einem ersten Montagezwischenstand;
- Fig. 8:: eine schematische Schnittansicht einer zu montierenden Windenergieanlage in einem zweiten Montagezwischenstand;
- Fig. 9:: ein schematisches Blockdiagramm eines Verfahrens zur Montage einer Windenergieanlage mit einem segmentierten Generator;
- Fig. 10a-d: einen schematischen Ablauf der Montage von Rotorblättern an einem segmentierten Generator;
- Fig. 11:: eine schematische Schnittansicht einer zu montierenden Windenergieanlage in einem dritten Montagezwischenstand;
- Fig. 12: eine schematische Schnittansicht einer zu montierenden Windenergieanlage in einem abgeschlossenen Montagezustand.

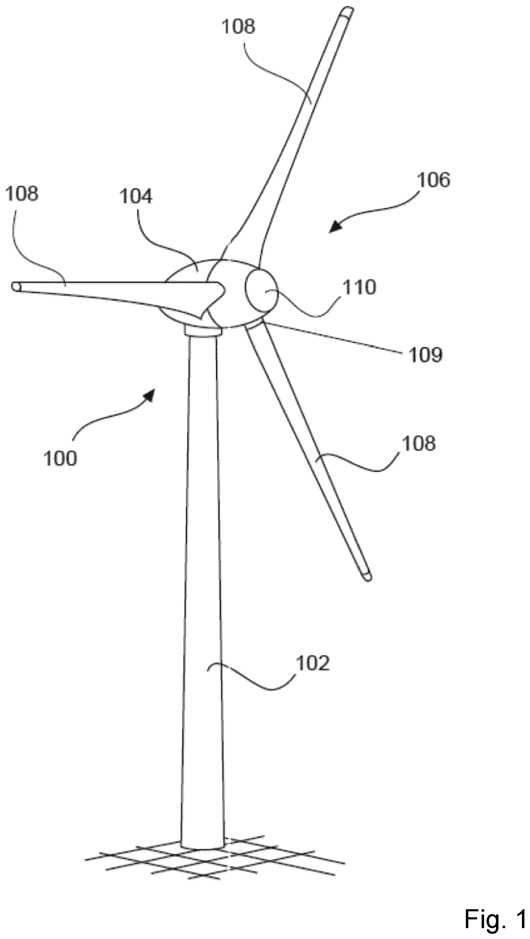

Figur 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

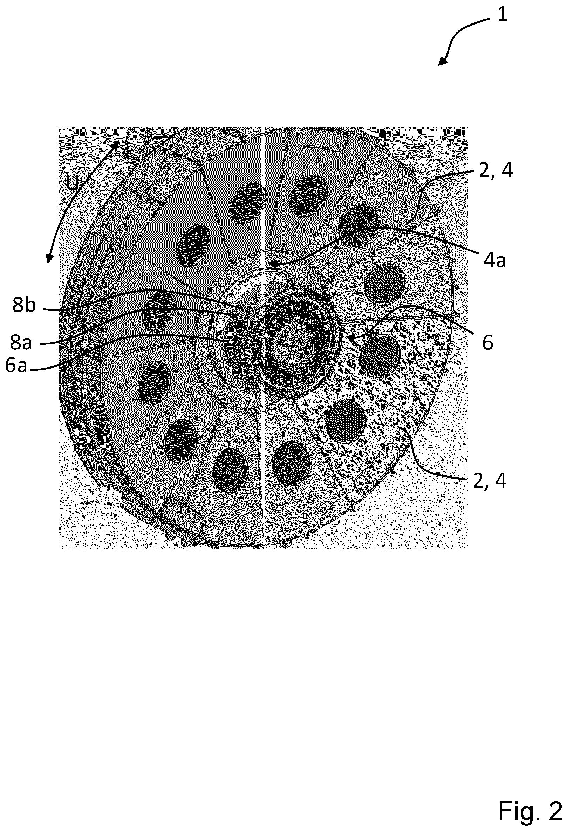

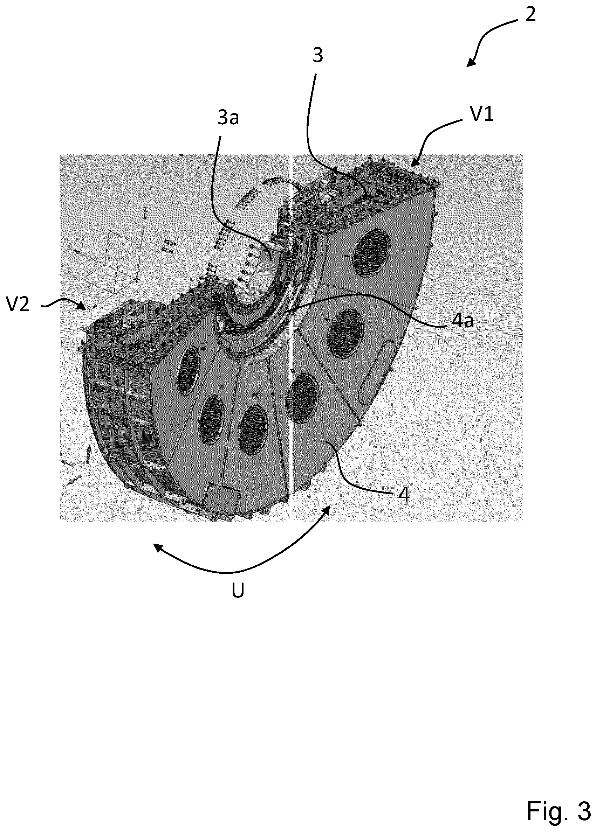

Die in Figur 1 schematisch dargestellte beispielhafte Ausführungsform einer Windenergieanlage 100 umfasst einen segmentierten Generator, wie dieser in einer bevorzugten Ausführungsform in Figur 2 schematisch dargestellt ist. Dieser segmentierte Generator 1 umfasst für den Betrieb der Windenergieanlage 100 zwei Generatorsegmente 2 wie dieser in Figur 3 dargestellt ist. Diese Generatorsegmente 2 weisen jeweils ein Statorsegment 3 und ein Rotorsegment 4 auf. Die beiden Generatorsegmente bzw. deren Statorsegment und Rotorsegment erstrecken sich in Umfangsrichtung jeweils um 180° zwischen zwei Verbindungsschnittstellen V1, V2. Die beiden Generatorsegmente 2 sind über die Verbindungsschnittstellen V1, V2 jeweils miteinander verbunden. Dies ist Figur 2 zu entnehmen. Für die Befestigung der beiden Generatorsegmente an den Verbindungsschnittstellen sind insbesondere Zentrierstifte bzw. Zentrierbolzen sowie Schraubenverbindungen vorgesehen. Mittels Zentrierstifte bzw. Zentrierbolzen werden das Rotorsegment und das Statorsegment des jeweiligen Generatorsegments und somit der Luftspalt L zwischen dem segmentierten Rotor und dem segmentierten Stator für den Betrieb der Windenergieanlage 100 ausgerichtet.

Das Statorsegment 3 ist für den Betrieb der Windenergieanlage an einem Maschinenträger 5 befestigt. Hierzu weist das Statorsegment 3 einen Statorflansch 3a auf und der Maschinenträger 5 umfasst einen Maschinenträgerflansch 5a. In der vorliegend dargestellten bevorzugten Ausführungsform kann der Statorflansch 3a mittels einer Schraubverbindung an dem Maschinenträgerflansch 5a befestigt werden. Der Maschinenträger 5 mit dem Maschinenträgerflansch 5a ist in Figur 3 nicht dargestellt.

Das Rotorsegment 4 ist für den Betrieb der Windenergieanlage an einem Hauptlager 6 befestigt. Hierzu weist das Rotorsegment 4 einen Rotorflansch 4a auf, über den das Rotorsegment an einem Rotorträger 6a des Hauptlagers 6 befestigt ist. In der vorliegend dargestellten bevorzugten Ausführungsform kann der Rotorflansch 4a mittels einer Schraubverbindung an dem Rotorträger 6a befestigt werden. Diese Schraubenverbindung ist in Figur 2 ebenfalls nicht dargestellt.

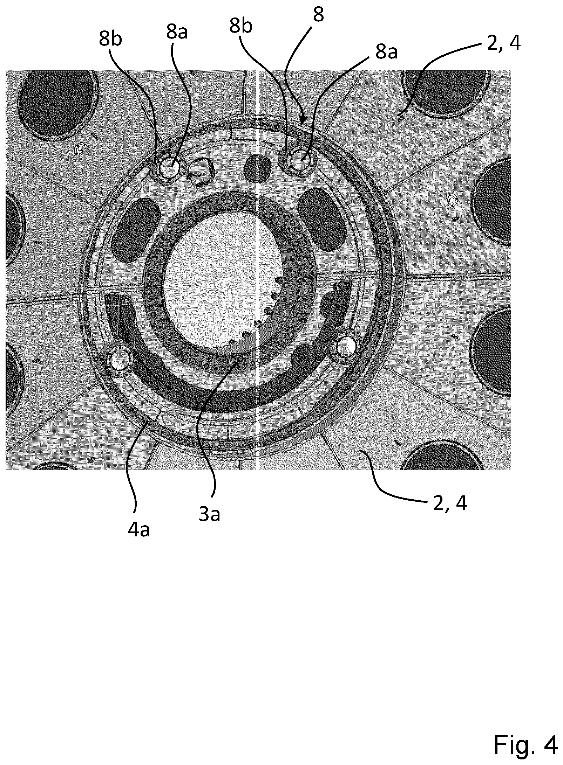

Der in den Figuren 2 und 3 dargestellte bevorzugte Ausführungsform eines segmentierten Generators 1 bzw. eines Generatorsegments 2 umfasst ferner eine Arretiervorrichtung 8. Dies geht aus Figur 4 hervor, welche eine Detailansicht des in Figur 2 gezeigten segmentierten Generators ohne das Hauptlager ist. Die Arretiervorrichtung 8 umfasst einen Arretierbolzen 8a. Andererseits ist eine Arretieraufnahme vorgesehen, welche eine dem Arretierbolzen 8a entsprechende Bolzenaufnahmeöffnung 8b ausbildet. In Figur 2 ist die Arretiervorrichtung 8 in einer Arretierstellung dargestellt, bei der der Arretierbolzen 8a in die entsprechende Bolzenaufnahmeöffnung 8b der Arretieraufnahme geschoben ist. In dieser Stellung wird eine relative Drehbewegung des Rotorträgers gegenüber dem Statorsegment unterbunden. Für den Betrieb nimmt die Arretiervorrichtung 8 eine Freigabestellung ein, bei der der Arretierbolzen 8a aus der Bolzenaufnahmeöffnung 8b der Arretieraufnahme herausgeschoben ist, so dass der Rotorträger im Betrieb gegenüber dem Statorsegment eine relative Drehbewegung ausführen kann.

In der vorliegenden Ausführungsform weist das Statorsegment des jeweiligen Generatorsegments im Bereich des Statorflansches eine Arretiervorrichtung auf, die in die im Hauptlager vorgesehene Arretieraufnahme eingreift, um eine Drehbewegung des Rotorträgers und somit einer Nabe 7 gegenüber dem Statorsegment bzw. dem Maschinenträger 5 während der Montage der Rotorblätter zu verhindern.

Es ist für die in den Figuren 2 bis 4 dargestellte Ausführungsform vorgesehen, dass drei Rotorblätter 108 mit der Nabe 7 jeweils drehbar über ein Rotorblattlager 7a verbunden sind. Ferner ist vorgesehen, dass die Nabe 7 über das Hauptlager 6 mit dem Maschinenträger verbunden ist. Dies ist in den Figuren 2 bis 4 nicht dargestellt.

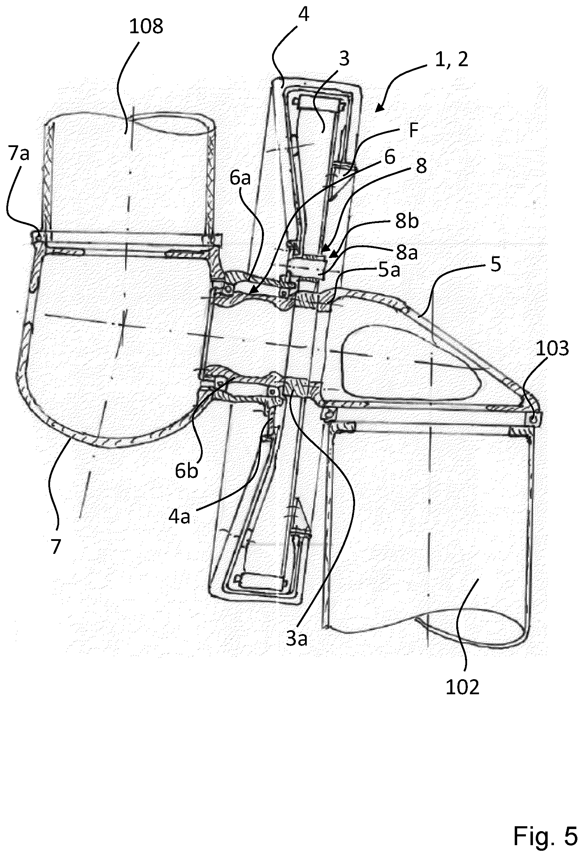

Der schematischen Abbildung in Figur 5 ist jedoch ein prinzipieller Aufbau einer erfindungsgemäßen Windenergieanlage 100 mit den zuvor beschriebenen Generatorsegmenten 2 bzw. dem zuvor beschriebenen segmentierten Generator 1 zu entnehmen.

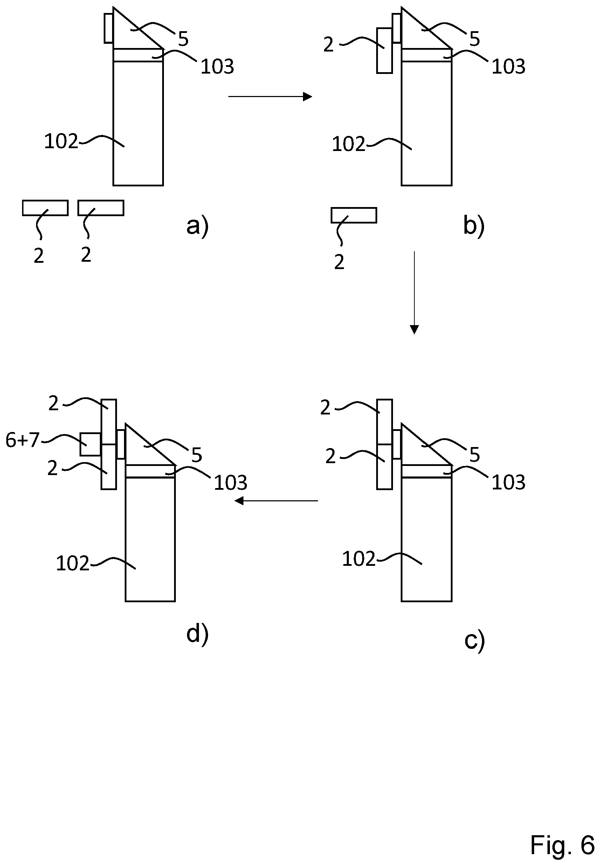

In den Figuren 6a bis 6d ist ein schematischer Ablauf der Montage einer Windenergieanlage mit Generatorsegmenten des in den Figuren 2 bis 4 gezeigten segmentierten Generators gemäß einer möglichen Ausführungsform dargestellt.

Das Verfahren umfasst zunächst die Schritte des Bereitstellens 1010 eines Turms 102 der Windenergieanlage 100 in einem Einbauzustand, des Bereitstellen 1020 des Maschinenträgers 5 und des Anhebens und Positionierens 1030 des Maschinenträgers 5 an einem oberen Ende des Turms 102, so dass der Maschinenträger 5 mit dem Turm 102 über ein Turmlager 103 drehbar koppelbar ist. Der Maschinenträger wurde an dem Turm für Montagezwecke zunächst lediglich gemäß dem Verfahrensschritt Vor-Fixieren 1040 vor-fixiert, so dass der Maschinenträger 5 gegenüber dem Turm 102 mittels des Turmlagers 103 drehbar gelagert ist.

Ferner ist in Figur 36 zu erkennen, dass zwei Generatorsegmente 2 in einer Transportposition bereitgestellt wurden 1050, wobei das Statorsegment 3 und das Rotorsegment 4 des jeweiligen Generatorsegments 2 miteinander verbunden sind.

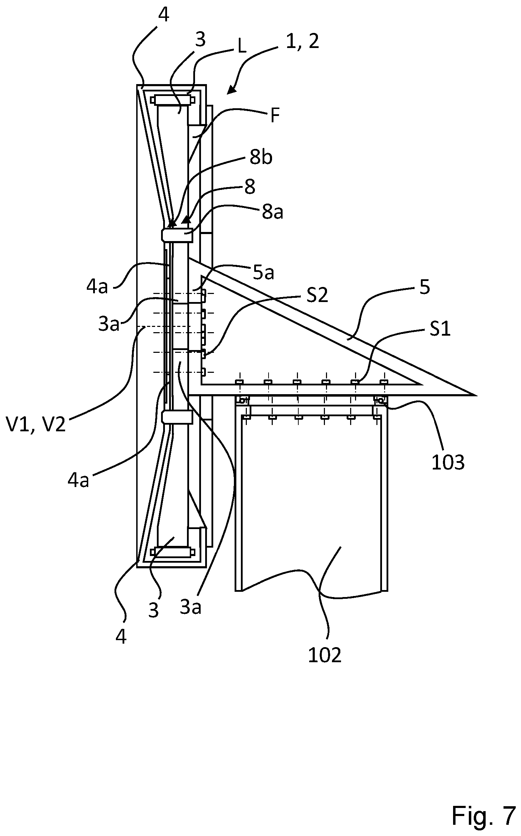

Figur 7 zeigt eine Schnittdarstellung eines entsprechenden Turms 102, an dessen Oberseite ein Turmlager verschraubt ist. Auf der Oberseite des Turmlagers 103 ist ein Maschinenträger 5 angeordnet, der, wie zuvor beschrieben, mittels Schrauben S1 am dem Turmlager für Montagezwecke vor-fixiert worden ist. Darüber hinaus ist in dieser bevorzugten Ausführungsform zu erkennen, dass das Rotorsegment und das Statorsegment über einen Flansch F mittels einer Schraubenverbindung (nicht dargestellt) verbunden sind.

Figur 6b zeigt ein Generatorsegment 2, welches gemäß der Schritte Anheben und Positionieren 1060 aus der Transportposition in eine Montageposition auf einer 6-Uhr-Position angehoben und positioniert wurde, so dass der Statorflansch 3a an dem Maschinenträgerflansch 5a angeordnet ist. In dieser Montageposition ist ferner der Schritt des Vor-Fixierens 1070 erfolgt, bei dem das Generatorsegment 2 für Montagezwecke mittels des Statorflansches 3a an dem Maschinenträgerflansch 5a vor-fixiert wurde. Dies wird über eine Schraubenverbindung S2 realisiert. Entsprechend weist der Maschinenträger am Maschinenträgerflansch 5a Durchgangslöcher und der Statorflansch Sacklochbohrungen mit einem Innengewinde auf. Zum Vor-Fixieren werden die Schrauben durch die Durchgangslöcher am Maschinenträgerflansch 5a hindurchgesteckt und in die Sacklochbohrungen mit dem Innengewinde im Statorflansch eingeschraubt.

In Figur 6c ist das zweite Generatorsegment in der Montageposition gezeigt, welches gemäß der Schritte Anheben und Positionieren 1080 aus der Transportposition in eine weitere Montageposition in einer 12-Uhr-Position an den Maschinenträgerflansch 5a des Maschinenträgers 5 angehoben und positioniert wurde, so dass das bereits vor-fixierte Generatorsegment 2 mit dem in der weiteren Montageposition positionierten Generatorsegment über die Verbindungsschnittstellen der jeweiligen Generatorsegmente verbunden werden kann. In dieser Position erfolgte ein Vor-Fixieren 1090 des weiteren Generatorsegments 2 für Montagezwecke mittels des Statorflansches 3a an den Verbindungsschnittstellen V1, V2 des bereits vor-fixierten Generatorsegments und dem Maschinenträgerflansch 5a in dieser weiteren Montageposition (12-Uhr-Position).

Diese Zwischenschritt, bei dem die beiden Generatorsegmente vor-fixiert am Maschinenträger fixiert sind, geht aus Figur 7 hervor.

In Figur 6d ist schließlich das gemäß dem Verfahrensschritt Bereitstellen 1100 des Hauptlagers 6 bereitgestellte Hauptlager 6 gezeigt, an dem eine Nabe 7 befestigt ist, welches drei Rotorblattlager 7a aufweist (nicht in Figur 6d dargestellt). Den Figuren 5 und 8-10 ist ein entsprechendes Rotorblattlager 7a zu entnehmen. Das Hauptlager 6 wurde zusammen mit der Nabe angehoben und positioniert 1110, so dass der Statorflansch 3a des Statorsegments 3 zwischen dem Maschinenträgerflansch 5a und dem Achszapfen 6b angeordnet ist. In dem in Figur 3d dargestellten Montagefortschritt ist ferner vorgesehen, dass der Achsflansch 6b an dem Maschinenträgerflansch 5a für den Betrieb der Windenergieanlage befestigt ist 1120, wobei der Statorflansch 3a des Statorsegments 3 zwischen dem Maschinenträgerflansch 5a und dem Achszapfen 6b angeordnet ist, und der Maschinenträger an dem Turm 102 für den Betrieb der Windenergieanlage 110 befestigt ist 1130.

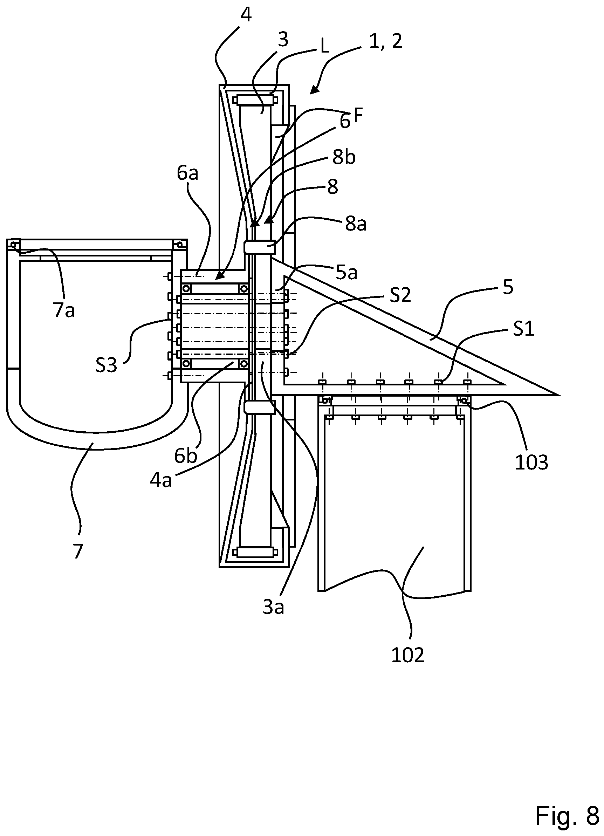

Dies geht aus Figur 8 hervor. Es ist zu erkennen, dass die Nabe mittels einer Schraubenverbindung S3 an dem Rotorträger 6a des Hauptlagers 6 befestigt ist. Ferner ist Figur 8 zu entnehmen, dass der Achszapfen 6b des Hauptlagers 6 an dem Maschinenträgerflansch 5a befestigt ist. Hierzu weisen der Achszapfen 6b, der Statorflansch 3a und der Maschinenträgerflansch 5a Durchgangslöcher auf, durch die sich eine Schraube S4 mit entsprechender Länge erstreckt. Zur Befestigung des Statorflansches und des Achszapfens an dem Maschinenträgerflansch 5a für den Betrieb der Windenergieanlage werden auf die Schrauben Gewindemuttern aufgeschraubt. Entsprechend wirkt über die Schrauben eine Spannkraft, welche den Statorflansch und den Achszapfen und den Maschinenträgerflansch für den Betrieb der Windenergieanlage miteinander befestigt.

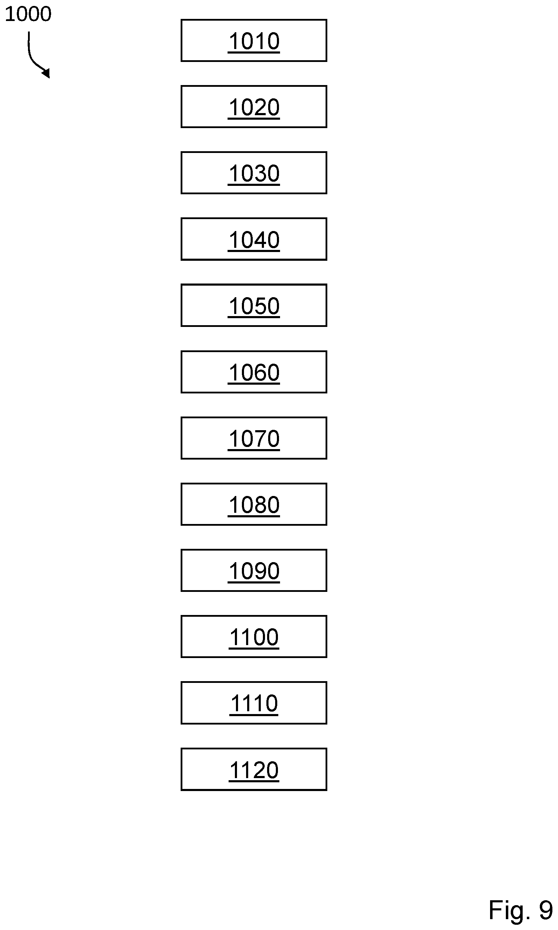

Figur 9 zeigt ein schematisches Blockdiagramm des Verfahrens 1000 zur Montage einer Windenergieanlage mit dem in den Figuren 2-4 gezeigten segmentierten Generator, wie dies in Bezug auf die Figuren 3a bis 3d und die Figuren 7 und 8 beschrieben wurde.

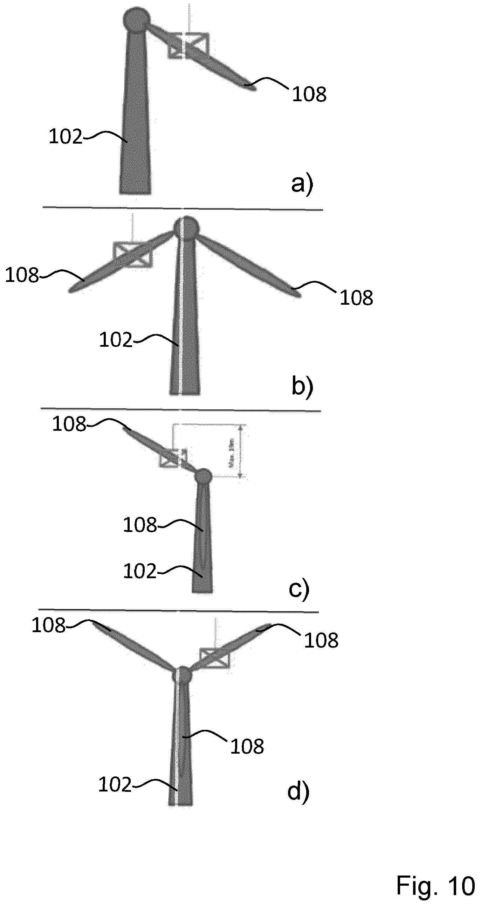

In den Figuren 10a bis 10d ist ein schematischer Ablauf der Montage von Rotorblättern an dem segmentierten Generator gemäß einer möglichen Ausführungsform dargestellt. Der dort gezeigte Montageablauf der Rotorblätter schließt an die Verfahrensschritte, welche in Bezug auf die Figuren 6a bis 6d sowie 9 beschrieben wurden, an.

Das Verfahren sieht ein Bereitstellen eines ersten, zweiten und dritten Rotorblattes vor. Zunächst wird das erste Rotorblatt angehoben und an einem ersten Rotorblattlager der drei Rotorblattlager 7a positioniert und befestigt. Dies ist in Figur 10a dargestellt. In dieser bevorzugten Ausführungsform ist es vorgesehen, dass das erste Rotorblattlager 7a in einer 4-Uhr-Position bereitgestellt wird, so dass eine Befestigung des ersten Rotorblattes 108 an dem ersten Rotorblattlager 7a in der 4-Uhr-Position erfolgt. Anschließend wird das zweite Rotorblatt angehoben und an einem zweiten Rotorblattlager der drei Rotorblattlager 7a positioniert und befestigt. In dieser bevorzugten Ausführungsform ist es vorgesehen, dass das zweite Rotorblattlager 7a in einer 8-Uhr-Position bereitgestellt wird, so dass eine Befestigung des zweiten Rotorblattes 108 an dem zweiten Rotorblattlager 7a in der 8-Uhr-Position erfolgt. Dies zeigt Figur 10b). Das Drehen in die 8-Uhr-Position erfolgt ebenfalls mit Hilfe eines Hauptkrans.

Für die Montage des dritten Rotorblattes wird die Nabe mit den beiden daran befestigten Rotorblättern gedreht, so dass eines der beiden Rotorblätter in einer 10-Uhr-Position ausgerichtet ist. Vorzugsweise ist das zweite Rotorblatt in der 10-Uhr-Position ausgerichtet und das erste Rotorblatt in der 6-Uhr-Position ausgerichtet. Diese Ausrichtung der Rotorblätter mit der Nabe ist in Figur 10c gezeigt. Die Montage des dritten Rotorblattes erfolgt dann in der 2-Uhr-Position, wie dies aus Figur 10d hervorgeht. Die Montage des dritten Rotorblattes erfolgt dann analog zur Montage der ersten beiden Rotorblätter, d. h. zunächst wird das dritte Rotorblatt angehoben und an einem dritten Rotorblattlager der drei Rotorblattlager positioniert und dort befestigt.

Vorzugsweise ist es vorgesehen, dass das Verfahren ein Arretieren des Rotorträgers 6a des Hauptlagers 6 an dem Statorsegment 3 bzw. dem Maschinenträger 5 vor der Montage des ersten Rotorblattes 108 an der Nabe 7 mit der zuvor beschriebenen Arretiervorrichtung 8 vorsieht. Das Lösen der Arretierung erfolgt dann nach der Montage der ersten beiden Rotorblätter 108 an der Nabe, d. h. die Arretierbolzen werden aus der Arretieraufnahme herausbewegt. Die Nabe 7 wird dann zusammen mit den beiden montierten Rotorblättern 108 vor der Montage des dritten Rotorblattes 108 gedreht, so dass eines der beiden bereits montierten Rotorblätter in einer 6-Uhr-Position ausgerichtet ist und das andere der beiden Rotorblätter in einer 10-Uhr-Position oder in einer 2-Uhr-Position ausgerichtet ist. Sofern vor der Montage des dritten Rotorblattes eine erneute Arretierung erfolgt ist, ist in dem Verfahren ein Lösen der Arretierung nach der Montage der drei Rotorblätter 108 an der Nabe 7 vorgesehen.

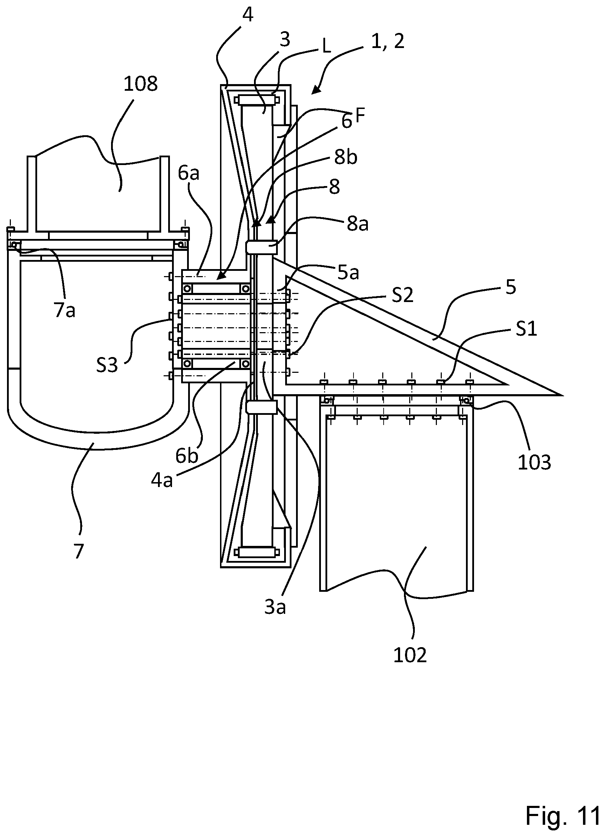

Es ist zu verstehen, dass das Drehen der Nabe in die verschiedenen Montagepositionen mit Hilfe eines Hauptkrans erfolgt. Bis zu diesem Zeitpunkt und auch während der Montage der Rotorblätter ist der Rotorträger 6a nicht mit dem Rotorflansch 4a verschraubt oder in einer anderen Wiese verbunden. Bis dahin ist es auch vorgesehen, dass das Rotorsegment und das Statorsegment mittels des Flansches F und einer nicht dargestellten Schraubenverbindung drehfest miteinander verbunden sind. Dies ist in Figur 11 gezeigt.

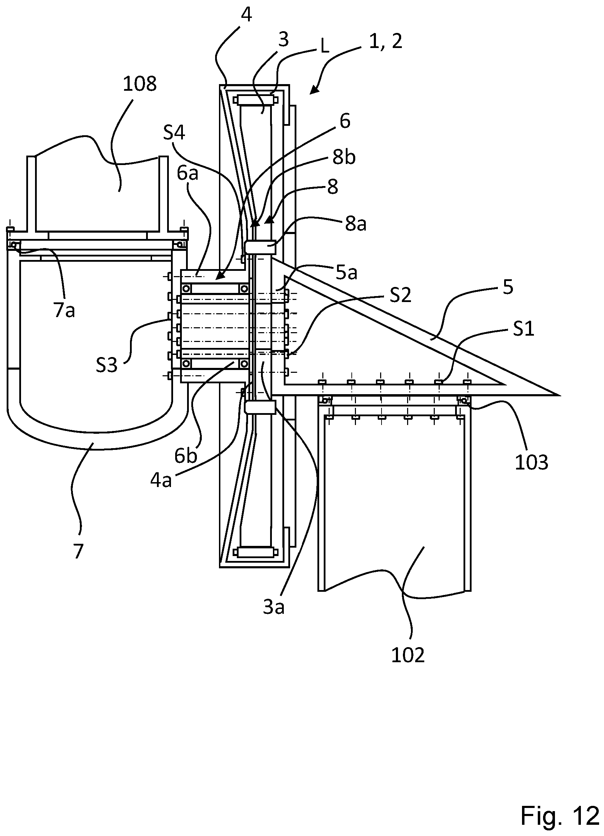

Ferner ist es für den Betrieb der Windenergieanlage erforderlich, dass das Statorsegment von dem Rotorsegment gelöst wird, so dass der Rotor gegenüber dem Stator drehbar ist. In den vorliegenden Ausführungsbeispielen ist der Flansch mit der Schraubenverbindung zu lösen und der Rotorträger 6a mit dem Rotorflansch 4a zu verbinden. Dies kann mittels einer Schraubenverbindung S4 erfolgen, wie dies exemplarisch in Figur 12 dargestellt ist. Dieser Schritt ist erforderlich, wenn das Statorsegment mit dem Rotorsegment verbunden ist.

Schließlich sind für den Betrieb der Windenergieanlage die vor-fixierten Generatorsegmente und der an dem Turm vor-fixierte Maschinenträger zu befestigen.

In vorteilhafter Weise kann sowohl das Befestigen des Rotorträgers am Rotorflansch als auch der vor-fixierten Generatorsegmente und des an dem Turm vor-fixierten Maschinenträgers ohne die Zuhilfenahme eines Krans erfolgen. Insbesondere kann der für das Heben des Maschinenträgers, der Generatorsegmente, des Hauptlagers und der Nabe sowie der Rotorblätter eingesetzte Kran schon abgebaut und an einen anderen Einsatzort verlagert werden, während das Befestigen des Rotorträgers am Rotorflansch, der vor-fixierten Generatorsegmente und des an dem Turm vor-fixierten Maschinenträgers erfolgt.

### BEZUGSZEICHENLISTE

- 1: Segmentierter Generator
- 2: Generatorsegment
- 3: Statorsegment
- 3a: Statorflansch
- 4: Rotorsegment
- 4a: Rotorflansch
- 5: Maschinenträger
- 5a: Maschinenträgerflansch
- 6: Hauptlager
- 6a: Rotorträger
- 6b: Achszapfen
- 7: Nabe
- 7a: Rotorblattlager
- 8: Arretiervorrichtung
- 8a: Arretierbolzen
- 8b: Arretieraufnahme
- 100: Windenergieanlage
- 102: Turm
- 103: Turmlager
- 104: Gondel
- 105: Maschinenträger
- 106: Rotor
- 108: Rotorblatt
- 109: Rotorblattwurzeln
- 110: Spinner
- U: Umfangsrichtung

## Patentansprüche

1. Verfahren (1000) zur Montage eines segmentierten Generators (1) einer Windenergieanlage (100), wobei
der segmentierte Generator (1) für den Betrieb der Windenergieanlage (100) aus zwei oder mehreren Generatorsegmenten (2) gebildet wird, wobei die Generatorsegmente (2) jeweils ein Statorsegment (3) und ein Rotorsegment (4) aufweisen, wobei das Statorsegment (3) zur Befestigung des Statorsegments (3) an einem Maschinenträgerflansch (5a) eines Maschinenträgers (5) einen Statorflansch (3a) aufweist und das Rotorsegment (4) zur Befestigung an einem Rotorträger (6a) eines Hauptlagers (6) einen Rotorflansch (4a) aufweist, wobei sich die zwei oder mehreren Generatorsegmente (2) in Umfangsrichtung (U) jeweils zwischen zwei Verbindungsschnittstellen (V1, V2) erstrecken, die zur Verbindung mit Verbindungsschnittstellen (V1, V2) von in Umfangsrichtung (U) benachbart angeordneten Generatorsegmenten ausgebildet sind,
das Verfahren (1000) umfassend die Schritte:
- Bereitstellen (1010) eines Turms (102) der Windenergieanlage (100) in einem Einbauzustand,
- Bereitstellen (1020) des Maschinenträgers (5); und
- Anheben und Positionieren (1030) des Maschinenträgers (5) an einem oberen Ende des Turms (102), so dass der Maschinenträger (5) mit dem Turm (102) über ein Turmlager (103) drehbar koppelbar ist,
- Vor-Fixieren (1040) des Maschinenträgers an dem Turm (102) für Montagezwecke, so dass der Maschinenträger (5) gegenüber dem Turm (102) mittels des Turmlagers (103) drehbar gelagert ist,
- Bereitstellen (1050) von zwei oder mehreren Generatorsegmenten (2) in einer Transportposition, wobei das Statorsegment (3) und das Rotorsegment (4) des jeweiligen Generatorsegments (2) miteinander verbunden sind,
- Anheben und Positionieren (1060) eines der zwei oder mehreren bereitgestellten Generatorsegmente (2) aus der Transportposition in eine Montageposition, in der der Statorflansch (3a) an dem Maschinenträgerflansch (5a) angeordnet ist,
- Vor-Fixieren (1070) des Generatorsegments (2) für Montagezwecke mittels des Statorflansches (3a) an dem Maschinenträgerflansch (5a) in der Montageposition,
- Anheben und Positionieren (1080) mindestens eines weiteren der zwei oder mehreren Generatorsegmente (2) aus der Transportposition in eine weitere Montageposition an den Maschinenträgerflansch (5a) des Maschinenträgers (5), so dass das bereits vor-fixierte Generatorsegment (2) mit dem in der weiteren Montageposition positionierten Generatorsegment über die Verbindungsschnittstellen der jeweiligen Generatorsegmente verbunden werden kann,
- Vor-Fixieren (1090) des weiteren Generatorsegments (2) für Montagezwecke in der weiteren Montageposition
o mittels des Statorflansches (3a) an dem Maschinenträgerflansch (5a) und/oder
o an dem bereits vor-fixierten Generatorsegment über die Verbindungsschnittstellen der jeweiligen Generatorsegmente, wobei
die Schritte Anheben, Positionieren und Vor-Fixieren mit weiteren der zwei oder mehreren Generatorsegmente (2) wiederholt werden, bis die angehobenen, positionierten und fixierten Generatorsegmente (2) den segmentierten Generator (1) bilden können,
- Bereitstellen (1100) des Hauptlagers (6) und einer an dem Hauptlager (6) befestigten Nabe (7) in der Transportposition, wobei an der Nabe vorzugsweise drei Rotorblattlager (7a) vorgesehen sind, wobei das Hauptlager (6) den Rotorträger (6a) und einen Achszapfen (6b) umfasst, wobei der Rotorträger (6a) für den Betrieb des segmentierten Generators (1) gegenüber dem Achszapfen (6b) drehbar gelagert ist,
- Anheben und Positionieren (1110) des Hauptlagers (6), so dass der Statorflansch (3a) des Statorsegments (3) zwischen dem Maschinenträgerflansch (5a) und dem Achszapfen (6b) angeordnet ist, und
- Befestigen (1120) des Achsflansches (6b) an dem Maschinenträgerflansch (5a) für den Betrieb der Windenergieanlage, wobei der Statorflansch (3a) des Statorsegments (3) zwischen dem Maschinenträgerflansch (5a) und dem Achszapfen (6b) angeordnet ist, wobei der Rotorträger (6a) für die Montage von Rotorblättern (108) an der Nabe (7) noch nicht mit den jeweiligen Rotorsegmenten (4) der Generatorsegmente (2) verbunden ist oder wird.

2. Verfahren nach dem vorhergehenden Anspruch 1, umfassend die Schritte:
- Bereitstellen eines ersten Rotorblattes (108),
- Anheben und Positionieren des ersten Rotorblattes (108) an einem ersten Rotorblattlager der drei Rotorblattlager (7a), und
- Befestigen des ersten Rotorblattes (108) an dem ersten Rotorblattlager (7a),
- wobei vorzugsweise das erste Rotorblattlager (7a) in einer 4-Uhr-Position oder in einer 8-Uhr-Position bereitgestellt wird, so dass eine Befestigung des ersten Rotorblattes (108) an dem ersten Rotorblattlager (7a) in der 4-Uhr-Position oder in der 8-Uhr-Position erfolgt.

3. Verfahren nach dem vorhergehenden Anspruch 2, umfassend die Schritte:
- Bereitstellen eines zweiten Rotorblattes (108),
- Anheben und Positionieren des zweiten Rotorblattes (108) an einem zweiten Rotorblattlager der drei Rotorblattlager (7a), und
- Befestigen des zweiten Rotorblattes (108) an dem zweiten Rotorblattlager (7a),
- wobei vorzugsweise das zweite Rotorblattlager (7a) in einer 4-Uhr-Position oder in einer 8-Uhr-Position bereitgestellt wird, so dass eine Befestigung des zweiten Rotorblattes (108) an dem zweiten Rotorblattlager (7a) in der 4-Uhr-Position oder in der 8-Uhr-Position erfolgt.

4. Verfahren nach dem vorhergehenden Anspruch 3, umfassend die Schritte:
- Bereitstellen eines dritten Rotorblattes (108),
- vorzugsweise Drehen der Nabe (7) mit den beiden befestigten Rotorblätterr (108), so dass eines der beiden Rotorblätter in einer 10-Uhr-Position ausgerichtet ist und das andere der beiden Rotorblätter (108) in einer 6-Uhr-Position ausgerichtet ist,
- Anheben und Positionieren des dritten Rotorblattes an einem dritten Rotorblattlager der drei Rotorblattlager (7a), und
- Befestigen des dritten Rotorblattes (108) an dem dritten Rotorblattlager (7a),
- wobei vorzugsweise das dritte Rotorblattlager (7a) in einer 2-Uhr-Position oder in einer 10-Uhr-Position bereitgestellt wird, so dass eine Befestigung des dritten Rotorblattes (108) an dem dritten Rotorblattlager (7a) in der 2-Uhr-Position oder in der 10-Uhr-Position erfolgt.

5. Verfahren nach einem der vorhergehenden Ansprüche 1 bis 4, wobei das Statorsegment (3) zumindest eines Generatorsegments (2), vorzugsweise im Bereich des Statorflansches (3a), eine Arretiervorrichtung (8) aufweist und der Rotorträger (6a) des Hauptlagers (6) eine Arretieraufnahme aufweist, in welche die Arretiervorrichtung (8) eingreifen kann, um eine Drehbewegung des Rotorträgers (6a) und somit der Nabe (4) gegenüber dem Statorsegment (3) bzw. dem Maschinenträger (5) während der Montage eines der Rotorblätter (108) in einer Montageposition zu verhindern, und freigeben kann, um eine Drehbewegung des Rotorträgers (6a) und somit der Nabe (4) gegenüber dem Statorsegment bzw. dem Maschinenträger (5) in eine gewünschte Montagepositior für die Montage eines der Rotorblätter (108) zu ermöglichen,
das Verfahren umfassend die Schritte:
- Arretieren des Rotorträgers (6a) des Hauptlagers (6) an dem Statorsegment (3) und/oder dem Maschinenträger (5) vor der Montage des ersten Rotorblattes (108) an der Nabe (7), und
- Lösen der Arretierung nach der Montage der ersten beiden Rotorblätter (108) an der Nabe, und
- Drehen der Nabe (7) mit den beiden montierten Rotorblättern (108) vor der Montage des dritten Rotorblattes (108), so dass eines der beiden bereits montierten Rotorblätter in einer 6-Uhr-Position ausgerichtet ist und das andere der beiden Rotorblätter in einer 10-Uhr-Position oder in einer 2-Uhr-Position ausgerichtet ist, und
- Arretieren des Rotorträgers (6a) des Hauptlagers (6) an dem Statorsegment (3) und/oder dem Maschinenträger (5) vor der Montage des dritten Rotorblattes (108) an der Nabe (7), und
- Montage des dritten Rotorblattes (108) an die Nabe (7).

6. Verfahren nach dem vorhergehenden Anspruch 5, wobei die Arretiervorrichtung (8) mindestens einen verschiebbaren Arretierbolzen (8a) aufweist und die Arretieraufnahme an dem Rotorträger (6a) mindestens eine dem Arretierbolzen (8a) entsprechende Bolzenaufnahmeöffnung (8b) ausbildet, wobei der Schritt des Arretierens ein Verschieben des mindestens einen Arretierbolzens in die entsprechende Bolzenaufnahmeöffnung hinein umfasst und/oder der Schritt des Freigebens ein Verschieben des mindestens einen Arretierbolzens aus der entsprechenden Bolzenaufnahmeöffnung heraus umfasst.

7. Verfahren nach einem der vorhergehenden Ansprüche 1 bis 6, umfassend die Schritte:
- Verbinden des Rotorträgers (6a) mit den jeweiligen Rotorsegmenten (4) der Generatorsegmente (2), und anschließend
- Lösen des Statorsegments (3) von dem Rotorsegment, so dass der Rotor (106) gegenüber dem Stator drehbar ist.

8. Verfahren nach einem der vorhergehenden Ansprüche 1 bis 7, wobei sich die Generatorsegmente (2) in Umfangsrichtung jeweils zwischen zwe Verbindungsschnittstellen (V1, V2) erstrecken, umfassend die Schritte:
- Vorbereiten der Verbindungsschnittstellen der Generatorsegmente (2) für die Befestigung benachbart angeordneter Generatorsegmente, und
- Befestigen von den Verbindungsschnittstellen (V1, V2) der benachbart angeordneten Generatorsegmente.

9. Verfahren nach einem der vorhergehenden Ansprüche 1 bis 8, umfassend die Schritte:
- Befestigen der vor-fixierten Generatorsegmente (2) für den Betrieb der Windenergieanlage, insbesondere nach der Montage der Rotorblätter (108) und/oder ohne Zuhilfenahme eines Krans, und/oder
- Befestigen (1130) des vor-fixierten Maschinenträgers (5) an dem Turm (102) für den Betrieb der Windenergieanlage (100), insbesondere nach der Montage der Rotorblätter (108) und/oder ohne Zuhilfenahme eines Krans.

10. Verfahren nach einem der vorhergehenden Ansprüche 2 bis 4 oder nach einem der vorhergehenden Ansprüche 2 bis 4 und nach einem der vorhergehenden Ansprüche 5 bis 9, umfassend den Schritt:
- Befestigen des Rotorträgers (6a) an den Rotorsegmenten (4) der Generatorsegmente (2) nachdem die Rotorblätter (108) an der Nabe (7) befestigt worden sind, insbesondere ohne Zuhilfenahme eines Krans.

11. Generatorsegment (2)
für einen segmentierten Generator einer Windenergieanlage aufweisend:
- ein Statorsegment (3), wobei das Statorsegment (3) zur Befestigung des Statorsegments an einem Maschinenträgerflansch (5a) eines Maschinenträgers (5) einen Statorflansch (3a) aufweist, und
- ein Rotorsegment (4), das zur Befestigung an einem Rotorträger (6a) eines Hauptlagers (6) einen Rotorflansch (4a) aufweist,
- wobei sich das Generatorsegment (2) in Umfangsrichtung (U) zwischen zwei Verbindungsschnittstellen (V1, V2) erstreckt, die zur Verbindung mit Verbindungsschnittstellen von in Umfangsrichtung benachbart angeordneten Generatorsegmenten (2) ausgebildet sind, wobe
- das Statorsegment (3) mit dem Rotorsegment (4) über eine Arretiervorrichtung (8) zu Montagezwecken gekoppelt sein kann, wobei die Arretiervorrichtung im Bereich des Rotorflansches (4a) und des Statorflansches (3a) vorgesehen ist, so dass das Rotorsegment (4) und das Statorsegment (3) im Bereich des Rotorflansches (4a) und des Statorflansches (3a) mindestens eine als Bolzenaufnahmeöffnung (8b) ausgebildete Arretieraufnahme aufweist, durch welche jeweils ein Arretierbolzen (8a) zur Arretierung des Rotorsegments (4) an dem Statorsegment (3) aus einer Freigabestellung eingeschoben sein kann, so dass die Arretiervorrichtung (8) eine Arretierstellung einnimmt, wobei der Arretierbolzen (8a) für den Betrieb des segmentierten Generators aus der Arretieraufnahme entfernbar ist, so dass die Arretiervorrichtung eine Freigabestellung einnimmt, und/oder
- der Statorflansch (3a) Befestigungsanschlüsse für ein Vor-Fixieren des Generatorsegments (2) am Maschinenträgerflansch (5a) für Montagezwecke aufweist und Befestigungsanschlüsse für ein Befestigen des Generatorsegments (2) am Maschinenträgerflansch (5a) für den Betrieb der Windenergieanlage (100) aufweist.

12. Segmentierter Generator (1) für eine Windenergieanlage (100), aufweisend zwei oder mehrere Generatorsegmente (2) nach dem vorhergehenden Anspruch 11.

13. Windenergieanlage (100) aufweisend ein Generatorsegment (2) nach dem vorhergehenden Anspruch 11 und/oder einen segmentierten Generator (1) nach dem vorhergehenden Anspruch 12.

## Claims

1. Method (1000) for mounting a segmented generator (1) of a wind turbine (100), wherein
the segmented generator (1) for the operation of the wind turbine (100) is formed from two or more generator segments (2), wherein the generator segments (2) each have a stator segment (3) and a rotor segment (4), wherein the stator segment (3) for fastening the stator segment (3) to a machine carrier flange (5a) of a machine carrier (5) has a stator flange (3a) and the rotor segment (4) for fastening to a rotor carrier (6a) of a main bearing (6) has a rotor flange (4a), wherein the two or more generator segments (2) in the circumferential direction (U) each extend between two connection interfaces (V1, V2) which are formed for connection with connection interfaces (V1, V2) of generator segments arranged adjacent in the circumferential direction (U),
the method (1000) comprising the steps of:
- providing (1010) a tower (102) of the wind turbine (100) in an installation state,
- providing (1020) the machine carrier (5); and
- lifting and positioning (1030) of the machine carrier (5) at an upper end of the tower (102), such that the machine carrier (5) can be rotatably coupled to the tower (102) via a tower bearing (103),
- pre-fixing (1040) of the machine carrier to the tower (102) for mounting purposes, such that the machine carrier (5) with respect to the tower (102) by means of the tower bearing (103) is rotatably mounted,
- providing (1050) two or more generator segments (2) in a transport position, wherein the stator segment (3) and the rotor segment (4) of the respective generator segment (2) are connected to one another,
- lifting and positioning (1060) of one of the two or more provided generator segments (2) from the transport position to a mounting position in which the stator flange (3a) is arranged on the machine carrier flange (5a),
- pre-fixing (1070) of the generator segment (2) for mounting purposes by means of the stator flange (3a) on the machine carrier flange (5a) in the mounting position,
- lifting and positioning (1080) of at least one further of the two or more generator segments (2) from the transport position into a further mounting position on the machine carrier flange (5a) of the machine carrier (5), so that the already pre-fixed generator segment (2) can be connected to the generator segment positioned in the further mounting position via the connection interfaces of the respective generator segments,
- pre-fixing (1090) of the further generator segment (2) for mounting purposes in the further mounting position
o by means of the stator flange (3a) to the machine carrier flange (5a) and/or
o to the already pre-fixed generator segment via the connection interfaces of the respective generator segments, whereby
the steps lifting, positioning and pre-fixing with further of the two or more generator segments (2) are repeated until the lifted, positioned and fixed generator segments (2) can form the segmented generator (1),
- providing (1100) the main bearing (6) and a hub (7) fastened to the main bearing (6) in the transport position, wherein preferably three rotor blade bearings (7a) are provided on the hub, wherein the main bearing (6) comprises the rotor carrier (6a) and an axle journal (6b), wherein the rotor carrier (6a) for the operation of the segmented generator (1) is rotatably mounted relative to the axle journal (6b),
- lifting and positioning (1110) of the main bearing (6) so that the stator flange (3a) of the stator segment (3) is arranged between the machine carrier flange (5a) and the axle journal (6b), and
- fastening (1120) of the axle flange (6b) to the machine carrier flange (5a) for the operation of the wind turbine, wherein the stator flange (3a) of the stator segment (3) is arranged between the machine carrier flange (5a) and the axle journal (6b), wherein the rotor carrier (6a) for mounting rotor blades (108) on the hub (7) is not yet or will not yet be connected to the respective rotor segments (4) of the generator segments (2).

2. A method according to the preceding claim 1, comprising the steps of:
- providing a first rotor blade (108),
- lifting and positioning the first rotor blade (108) on a first rotor blade bearing of the three rotor blade bearings (7a), and
- fastening the first rotor blade (108) to the first rotor blade bearing (7a),
- wherein preferably the first rotor blade bearing (7a) is provided in a 4 o'clock position or in an 8 o'clock position, so that a connection of the first rotor blade (108) to the first rotor blade bearing (7a) is made in the 4 o'clock position or in the 8 o'clock position.

3. A method according to the preceding claim 2, comprising the steps of:
- providing a second rotor blade (108),
- lifting and positioning the second rotor blade (108) on a second rotor blade bearing of the three rotor blade bearings (7a), and
- fastening the second rotor blade (108) to the second rotor blade bearing (7a),
- wherein preferably the second rotor blade bearing (7a) is provided in a 4 o'clock position or in an 8 o'clock position, so that a connection of the second rotor blade (108) to the second rotor blade bearing (7a) is made in in the 4 o'clock position or in the 8 o'clock position.

4. A method according to the preceding claim 3, comprising the steps of:
- providing a third rotor blade (108),
- preferably rotating the hub (7) with the two fastened rotor blades (108) so that one of the two rotor blades is aligned in a 10 o'clock position and the other of the two rotor blades (108) is aligned in a 6 o'clock position,
- lifting and positioning the third rotor blade on a third rotor blade bearing of the three rotor blade bearings (7a), and
- fastening the third rotor blade (108) to the third rotor blade bearing (7a),
- wherein preferably the third rotor blade bearing (7a) is provided in a 2 o'clock position or in a 10 o'clock position, so that a connection of the third rotor blade (108) to the third rotor blade bearing (7a) is made in the 2 o'clock position or in the 10 o'clock position.

5. A method according to any one of the preceding claims 1 to 4, wherein the stator segment (3) of at least one generator segment (2), preferably in the region of the stator flange (3a), has a locking device (8) and the rotor carrier (6a) of the main bearing (6) has a locking receiver, in which the locking device (8) can engage in order to prevent a rotational movement of the rotor carrier (6a) and thus of the hub (4) with respect to the stator segment (3) or the machine carrier (5), respectively, during the mounting of one of the rotor blades (108) in a mounting position, and can release to allow a rotational movement of the rotor carrier (6a) and thus of the hub (4) with respect to the stator segment or the machine carrier (5), respectively, into a desired mounting position for the mounting of one of the rotor blades (108),
the method comprising the steps of:
- locking the rotor carrier (6a) of the main bearing (6) to the stator segment (3) and/or the machine carrier (5) before mounting the first rotor blade (108) on the hub (7), and
- releasing the lock after mounting the first two rotor blades (108) on the hub, and
- rotating the hub (7) with the two mounted rotor blades (108) before mounting the third rotor blade (108) so that one of the two already mounted rotor blades is aligned in a 6 o'clock position and the other of the two rotor blades is aligned in a 10 o'clock position or in a 2 o'clock position, and
- locking the rotor carrier (6a) of the main bearing (6) to the stator segment (3) and/or the machine carrier (5) before mounting the third rotor blade (108) on the hub (7), and
- mounting the third rotor blade (108) on the hub (7).

6. A method according to the preceding claim 5, wherein the locking device (8) comprises at least one displaceable locking bolt (8a) and the locking receiver on the rotor carrier (6a) forms at least one bolt receiver opening (8b) corresponding to the locking bolt (8a), wherein the step of locking comprises a displacing of the at least one locking bolt into the corresponding bolt receiver opening and/or the step of releasing comprises a displacing of the at least one locking bolt out of the corresponding bolt receiver opening.

7. A method according to any one of the preceding claims 1 to 6, comprising the steps of:
- connecting the rotor carrier (6a) to the respective rotor segments (4) of the generator segments (2), and then
- releasing the stator segment (3) from the rotor segment so that the rotor (106) is rotatable with respect to the stator.

8. A method according to any one of the preceding claims 1 to 7, wherein the generator segments (2) in the circumferential direction each extend between two connection interfaces (V1, V2), comprising the steps of:
- preparing the connection interfaces of the generator segments (2) for the mounting of adjacently arranged generator segments, and
- fastening the connection interfaces (V1, V2) of the adjacently arranged generator segments.

9. A method according to any one of the preceding claims 1 to 8, comprising the steps of:
- fastening the pre-fixed generator segments (2) for operating the wind turbine, in particular after mounting the rotor blades (108) and/or without the aid of a crane, and/or
- fastening (1130) the pre-fixed machine carrier (5) to the tower (102) for operating the wind turbine (100), in particular after mounting the rotor blades (108) and/or without the aid of a crane.

10. A method according to any one of the preceding claims 2 to 4 or according to any one of the preceding claims 2 to 4 and to any one of the preceding claims 5 to 9, comprising the step of:
- fastening the rotor carrier (6a) to the rotor segments (4) of the generator segments (2) after the rotor blades (108) have been fastened to the hub (7), in particular without the aid of a crane.

11. A generator segment (2) for a segmented generator of a wind turbine, comprising:
- a stator segment (3), wherein the stator segment (3) for fastening the stator segment to a machine carrier flange (5a) of a machine carrier (5) has a stator flange (3a), and
- a rotor segment (4), that has rotor flange (4a) for fastening to a rotor carrier (6a) of a main bearing (6),
- wherein the generator segment (2) in the circumferential direction (U) extends between two connection interfaces (V1, V2) which are formed to be connected to connection interfaces of generator segments (2) arranged adjacent in the circumferential direction, wherein
- the stator segment (3) can be coupled to the rotor segment (4) via a locking device (8) for mounting purposes, wherein the locking device is provided in the region of the rotor flange (4a) and the stator flange (3a), so that the rotor segment (4) and the stator segment (3) have, in the region of the rotor flange (4a) and the stator flange (3a), at least one locking receiver formed as a bolt receiver opening (8b), through which one locking bolt (8a) each for locking the rotor segment (4) to the stator segment (3) can be inserted from a release position so that the locking device (8) takes a locking position, wherein the locking bolt (8a) can be removed from the locking receiver for the operation of the segmented generator, so that the locking device takes a release position, and/or
- the stator flange (3a) has fastening connections for pre-fixing the generator segment (2) to the machine carrier flange (5a) for mounting purposes and has fastening connections for fastening the generator segment (2) to the machine carrier flange (5a) for the operation of the wind turbine (100).

12. Segmented generator (1) for a wind turbine (100), having two or more generator segments (2) according to the preceding claim 11.

13. Wind turbine (100) comprising a generator segment (2) according to the preceding claim 11 and/or a segmented generator (1) according to the preceding claim 12.

## Revendications

1. Procédé (1000) de montage d'un générateur segmenté (1) d'une éolienne (100), dans lequel
le générateur segmenté (1) pour le fonctionnement de l'éolienne (100) est formé à partir de deux ou plusieurs segments de générateur (2), dans lequel les segments de générateur (2) présentent chacun un segment de stator (3) et un segment de rotor (4), dans lequel le segment de stator (3) présente une bride de stator (3a) pour la fixation du segment de stator (3) sur une bride de support de machine (5a) d'un support de machine (5) et le segment de rotor (4) présente une bride de rotor (4a) pour la fixation sur un support de rotor (6a) d'un palier principal (6), dans lequel les deux ou plusieurs segments de générateur (2) s'étendent dans la direction périphérique (U) respectivement entre deux interfaces de liaison (V1, V2), qui sont réalisées pour la liaison à des interfaces de liaison (V1, V2) de segments de générateur disposés de manière adjacente dans la direction périphérique (U),
le procédé (1000) comprenant les étapes :
- de mise à disposition (1010) d'une tour (102) de l'éolienne (100) dans un état de montage,
- de mise à disposition (1020) du support de machine (5) ; et
- de soulèvement et positionnement (1030) du support de machine (5) sur une extrémité supérieure de la tour (102) de telle sorte que le support de machine (5) peut être couplé de manière à pouvoir tourner à la tour (102) par l'intermédiaire d'un palier de tour (103),
- de préfixation (1040) du support de machine sur la tour (102) à des fins de montage, de telle sorte que le support de machine (5) est monté de manière à pouvoir tourner par rapport à la tour (102) au moyen du palier de tour (103),
- de mise à disposition (1050) de deux ou plusieurs segments de générateur (2) dans une position de transport, dans lequel le segment de stator (3) et le segment de rotor (4) du segment de générateur (2) respectif sont reliés l'un à l'autre,
- de soulèvement et positionnement (1060) de l'un des deux ou plusieurs segments de générateur (2) mis à disposition de la position de transport dans une position de montage, dans laquelle la bride de stator (3a) est disposée sur la bride de support de machine (5a),
- de préfixation (1070) du segment de générateur (2) à des fins de montage au moyen de la bride de stator (3a) sur la bride de support de machine (5a) dans la position de montage,
- de soulèvement et positionnement (1080) d'au moins un autre des deux ou plusieurs segments de générateur (2) hors de la position de transport dans une autre position de montage sur la bride de support de machine (5a) du support de machine (5), de telle sorte que le segment de générateur (2) déjà préfixé peut être relié au segment de générateur positionné dans l'autre position de montage par l'intermédiaire des interfaces de liaison des segments de générateur respectifs,
- de préfixation (1090) de l'autre segment de générateur (2) à des fins de montage dans l'autre position de montage
o au moyen de la bride de stator (3a) sur la bride de support de machine (5a) et/ou
o sur le segment de générateur déjà préfixé par les interfaces de liaison des segments de générateur respectifs, dans lequel
les étapes de soulèvement, de positionnement et de préfixation avec d'autres des deux ou plusieurs segments de générateur (2) sont répétées jusqu'à ce que les segments de générateur (2) soulevés, positionnés et fixés puissent former le générateur segmenté (1),
- de mise à disposition (1100) du palier principal (6) et d'un moyeu (7) fixé sur le palier principal (6) dans la position de transport, dans lequel trois paliers de pale de rotor (7a) sont de préférence prévus sur le moyeu, dans lequel le palier principal (6) comprend le support de rotor (6a) et un tourillon (6b),
dans lequel le support de rotor (6a) est monté de manière à pouvoir tourner par rapport au tourillon (6b) pour le fonctionnement du générateur segmenté (1),
- de soulèvement et positionnement (1110) du palier principal (6) de telle sorte que la bride de stator (3a) du segment de stator (3) est disposée entre la bride de support de machine (5a) et le tourillon (6b), et
- de fixation (1120) de la bride d'axe (6b) sur la bride de support de machine (5a) pour le fonctionnement de l'éolienne, dans lequel la bride de stator (3a) du segment de stator (3) est disposée entre la bride de support de machine (5a) et le tourillon (6b), dans lequel le support de rotor (6a) pour le montage de pales de rotor (108) sur le moyeu (7) n'est pas encore ou ne sera pas encore relié aux segments de rotor (4) respectifs des segments de générateur (2).

2. Procédé selon la revendication précédente 1, comprenant les étapes :
- de mise à disposition d'une première pale de rotor (108),
- de soulèvement et positionnement de la première pale de rotor (108) sur un premier palier de pale de rotor des trois paliers de pale de rotor (7a), et
- de fixation de la première pale de rotor (108) sur le premier palier de pale de rotor (7a),
- dans lequel, de préférence, le premier palier de pale de rotor (7a) est mis à disposition dans une position à 4 heures ou dans une position à 8 heures, de telle sorte qu'une fixation de la première pale de rotor (108) sur le premier palier de pale de rotor (7a) est effectuée dans la position à 4 heures ou dans la position à 8 heures.

3. Procédé selon la revendication précédente 2, comprenant les étapes :
- de mise à disposition d'une deuxième pale de rotor (108),
- de soulèvement et positionnement de la deuxième pale de rotor (108) sur un deuxième palier de pale de rotor des trois paliers de pale de rotor (7a), et
- de fixation de la deuxième pale de rotor (108) sur le deuxième palier de pale de rotor (7a),
- dans lequel, de préférence, le deuxième palier de pale de rotor (7a) est mis à disposition dans une position à 4 heures ou dans une position à 8 heures, de telle sorte qu'une fixation de la deuxième pale de rotor (108) sur le deuxième palier de pale de rotor (7a) est effectuée dans la position à 4 heures ou dans la position à 8 heures.

4. Procédé selon la revendication précédente 3, comprenant les étapes :
- de mise à disposition d'une troisième pale de rotor (108),
- de préférence de rotation du moyeu (7) avec les deux pales de rotor (108) fixées de telle sorte qu'une des deux pales de rotor est orientée dans une position à 10 heures et l'autre des deux pales de rotor (108) est orientée dans une position à 6 heures,
- de soulèvement et positionnement de la troisième pale de rotor sur un troisième palier de pale de rotor des trois paliers de pale de rotor (7a), et
- de fixation de la troisième pale de rotor (108) sur le troisième palier de pale de rotor (7a),
- dans lequel, de préférence, le troisième palier de pale de rotor (7a) est mis à disposition dans une position à 2 heures ou dans une position à 10 heures, de telle sorte qu'une fixation de la troisième pale de rotor (108) sur le troisième palier de pale de rotor (7a) est effectuée dans la position à 2 heures ou dans la position à 10 heures.

5. Procédé selon l'une quelconque des revendications précédentes 1 à 4, dans lequel
le segment de stator (3) d'au moins un segment de générateur (2) présente, de préférence dans la zone de la bride de stator (3a), un dispositif de blocage (8) et le support de rotor (6a) du palier principal (6) présente un logement de blocage avec lequel le dispositif de blocage (8) peut venir en prise pour empêcher un mouvement de rotation du support de rotor (6a) et donc du moyeu (4) par rapport au segment de stator (3) ou au support de machine (5) pendant le montage d'une des pales de rotor (108) dans une position de montage, et peut se désengager pour permettre un mouvement de rotation du support de rotor (6a) et donc du moyeu (4) par rapport au segment de stator ou au support de machine (5) dans une position de montage souhaitée pour le montage d'une des pales (108),
le procédé comprenant les étapes :
- de blocage du support de rotor (6a) du palier principal (6) sur le segment de stator (3) et/ou le support de machine (5) avant le montage de la première pale de rotor (108) sur le moyeu (7), et
- de desserrage du blocage après le montage des deux premières pales (108) sur le moyeu, et
- de rotation du moyeu (7) avec les deux pales de rotor (108) montées avant le montage de la troisième pale de rotor (108) de telle sorte qu'une des deux pales de rotor déjà montées est orientée dans une position à 6 heures et l'autre des deux pales de rotor est orientée dans une position à 10 heures ou dans une position à 2 heures, et
- de blocage du support de rotor (6a) du palier principal (6) sur le segment de stator (3) et/ou le support de machine (5) avant le montage de la troisième pale de rotor (108) sur le moyeu (7), et
- de montage de la troisième pale (108) sur le moyeu (7).

6. Procédé selon la revendication précédente 5, dans lequel le dispositif de blocage (8) présente au moins un boulon de blocage coulissant (8a) et le logement de blocage sur le support de rotor (6a) réalise au moins une ouverture de réception de boulon (8b) correspondant au boulon de blocage (8a), dans lequel l'étape du blocage comprend un coulissement de l'au moins un boulon de blocage dans l'ouverture de réception de boulon correspondante et/ou l'étape de désengagement comprend un coulissement de l'au moins un boulon de blocage hors de l'ouverture de réception de boulon correspondante.

7. Procédé selon l'une quelconque des revendications précédentes 1 à 6, comprenant les étapes :
- de liaison du support de rotor (6a) aux segments de rotor (4) respectifs des segments de générateur (2), puis
- de desserrage du segment de stator (3) du segment de rotor de telle sorte que le rotor (106) peut être tourné par rapport au stator.

8. Procédé selon l'une quelconque des revendications 1 à 7 précédentes, dans lequel
les segments de générateur (2) s'étendent dans la direction périphérique respectivement entre deux interfaces de liaison (V1, V2), comprenant les étapes :
- de préparation des interfaces de liaison des segments de générateur (2) pour la fixation de segments de générateur disposés de manière adjacente, et
- de fixation des interfaces de liaison (V1, V2) des segments de générateur disposés de manière adjacente.

9. Procédé selon l'une quelconque des revendications précédentes 1 à 8, comprenant les étapes :
- de fixation des segments de générateur (2) préfixés pour le fonctionnement de
l'éolienne, en particulier après le montage des pales de rotor (108) et/ou sans l'aide d'une grue, et/ou
- de fixation (1130) du support de machine (5) préfixé sur la tour (102) pour le fonctionnement de l'éolienne (100), en particulier après le montage des pales de rotor (108) et/ou sans l'aide d'une grue.

10. Procédé selon l'une quelconque des revendications précédentes 2 à 4 ou selon l'une quelconque des revendications précédentes 2 à 4 et selon l'une quelconque des revendications précédentes 5 à 9, comprenant l'étape :
- de fixation du support de rotor (6a) sur les segments de rotor (4) des segments de générateur (2) après la fixation des pales de rotor (108) sur le moyeu (7), en particulier sans l'aide d'une grue.

11. Segment de générateur (2) pour un générateur segmenté d'une éolienne présentant :
- un segment de stator (3), dans lequel le segment de stator (3) présente, pour la fixation du segment de stator sur une bride de support de machine (5a) d'un support de machine (5), une bride de stator (3a), et
- un segment de rotor (4) qui, pour la fixation, sur un support de rotor (6a), d'un palier principal (6), présente une bride de rotor (4a),
- dans lequel le segment de générateur (2) s'étend dans la direction périphérique (U) entre deux interfaces de liaison (V1, V2), qui sont réalisées pour la liaison à des interfaces de liaison de segments de générateur (2) disposés de manière adjacente dans la direction périphérique, dans lequel
- le segment de stator (3) peut être couplé au segment de rotor (4) par l'intermédiaire d'un dispositif de blocage (8) à des fins de montage, dans lequel le dispositif de blocage est prévu dans la zone de la bride de rotor (4a) et de la bride de stator (3a), de telle sorte que le segment de rotor (4) et le segment de stator (3) présentent, dans la zone de la bride de rotor (4a) et de la bride de stator (3a) , au moins un logement de blocage réalisé comme une ouverture de réception de boulon (8b),
par lequel un boulon de blocage (8a), destiné à bloquer le segment de rotor (4) sur le segment de stator (3) à partir d'une position de désengagement, peut être enfilé de telle sorte que le dispositif de blocage (8) peut prendre une position de blocage, dans lequel le boulon de blocage (8a) peut être retiré, pour le fonctionnement du générateur segmenté, du logement de blocage de telle sorte que le dispositif de blocage prend une position de désengagement, et/ou
- la bride de stator (3a) présente des raccords de fixation pour une préfixation du segment de générateur (2) sur la bride de support de machine (5a) à des fins de montage et des raccords de fixation pour une fixation du segment de générateur (2) sur la bride du support de machine (5a) pour le fonctionnement de l'éolienne (100).

12. Générateur segmenté (1) pour une éolienne (100), présentant deux ou plusieurs segments de générateur (2) selon la revendication précédente 11.

13. Éolienne (100) présentant un segment de générateur (2) selon la revendication précédente 11 et/ou un générateur segmenté (1) selon la revendication précédente 12.
